# EUROPEAN PATENT SPECIFICATION

(11) **EP 4 027 611 B1**
(45) Date of publication and mention of the grant of the patent: **02.04.2025**
(21) Application number: 21211732.9
(22) Date of filing: 03.05.2011
(51) Int. Cl.: H04L 41/0816, H04L 41/08, H04L 49/356, H04L 49/00, H04L 12/46, H04L 49/351

(54) **VIRTUAL CLUSTER SWITCHING**
VIRTUELLE CLUSTER-UMSCHALTUNG
COMMUTATION DE GRAPPE VIRTUELLE

(30) Priority: 03.05.2010 US 33067810 P; 11.05.2010 US 33366610 P; 14.05.2010 US 33494510 P; 18.05.2010 US 34595310 P; 28.05.2010 US 34960310 P; 02.06.2010 US 35083810 P; 07.06.2010 US 35225510 P; 07.06.2010 US 35226410 P; 08.06.2010 US 35277610 P; 08.06.2010 US 35281910 P; 08.09.2010 US 38081810 P; 08.09.2010 US 38081910 P; 08.09.2010 US 38080310 P; 08.09.2010 US 38080710 P; 07.03.2011 US 201113042259; 14.04.2011 US 201113087239; 22.04.2011 US 201113092580; 22.04.2011 US 201113092701; 22.04.2011 US 201113092877; 22.04.2011 US 201113092724; 22.04.2011 US 201113092460; 22.04.2011 US 201113092752; 29.04.2011 US 201113098360; 02.05.2011 US 201113098490
(43) Date of publication of application: 13.07.2022
(62) Divisional of application: 16155677.4
(73) Proprietor: Avago Technologies International Sales Pte. Limited, Singapore 768923 (SG)
(72) Inventor: Vobbilisetty, Suresh, San Jose, 95129 (US); Chatwani, Dilip, San Jose, 95129 (US); Haris, Shiv, Palo Alto, 94303 (US); Koganti, Phanidhar, Sunnyvale, 94086 (US); Guntaka, Vidyasagara R., San Jose, 95131 (US); Willeke, Jesse B, Broomfield, 80020 (US); Narayanasamy, Senthilkumar, San Jose, 95132 (US)
(74) Representative: Bosch Jehle Patentanwaltsgesellschaft mbH

(56) References cited:
- US-A1- 2006 018 302
- US-A1- 2008 159 277
- US-A1- 2009 245 242
- PERLMAN R: "Challenges and opportunities in the design of TRILL: a routed layer 2 technology", 2009 IEEE GLOBECOM WORKSHOPS, HONOLULU, HI, USA, 30 November 2009 (2009-11-30) - 4 December 2009 (2009-12-04), Piscataway, NJ, USA, XP002649647, ISBN: 978-1-4244-5626-0, DOI: 10.1109/GLOCOMW.2009.5360776

## Description

### BACKGROUND

### Field

The present disclosure relates to network design. More specifically, the present disclosure relates to a method for a constructing a scalable switching system that facilitates automatic configuration.

### Related Art

The relentless growth of the Internet has brought with it an insatiable demand for bandwidth. As a result, equipment vendors race to build larger, faster, and more versatile switches to move traffic. However, the size of a switch cannot grow infinitely. It is limited by physical space, power consumption, and design complexity, to name a few factors. More importantly, because an overly large system often does not provide economy of scale due to its complexity, simply increasing the size and throughput of a switch may prove economically unviable due to the increased per-port cost.

One way to increase the throughput of a switch system is to use switch stacking. In switch stacking, multiple smaller-scale, identical switches are interconnected in a special pattern to form a larger logical switch. However, switch stacking requires careful configuration of the ports and inter-switch links. The amount of required manual configuration becomes prohibitively complex and tedious when the stack reaches a certain size, which precludes switch stacking from being a practical option in building a large-scale switching system. Furthermore, a system based on stacked switches often has topology limitations which restrict the scalability of the system due to fabric bandwidth considerations.

US 2008/159 277 A1 discloses a network architecture providing Ethernet services over a Fibre Channel (FC) storage area network infrastructure, wherein the fabric provides transparent bridging services to Ethernet end stations connected at the edge of the FC fabric via multi-protocol switches that support Ethernet over Fibre Channel (EoFC) technology. An Ethernet frame is received from a first Ethernet edge network by an ingress Ethernet port of a first virtual bridge and is encapsulated in a FC frame shell to form an EoFC frame. The EoFC frame is then transmitted out an egress FC port of the first virtual bridge and routed through the FC fabric using an FC routing protocol. When the encapsulated frame reaches an ingress FC port of a second virtual bridge, the EoFC frame is de-encapsulated to yield the original Ethernet frame, which is transmitted out an egress Ethernet port of the second virtual bridge into a second Ethernet edge network.

US 2006/018 302 A1 discloses a local area network comprising a peripheral equipment effecting layer-2-switching, physical link aggregation means, first and second core equipments effecting layer-2-switching and physical link aggregation means. The peripheral equipment is connected to the first and second core equipments by first and second physical links, and the first and second core equipments are connected to each other by a third physical link. The first and second core equipments comprise first and second management means to detect the presence of the core equipment in which they are not installed via the third physical link coupling them and in the event of mutual detection to instruct the transmission of a common identifier to the peripheral equipment so that it considers the first and second core equipments as a single layer-2-switch and its aggregation means aggregate the first and second physical links with the aggregation means of the first and second core equipments.

### SUMMARY

One embodiment of the present invention provides a switch system according to claim 1.

Furthermore, one embodiment of the present invention provides a method according to claim 14.

### BRIEF DESCRIPTION OF THE FIGURES

FIG. 1A illustrates an exemplary virtual cluster switch (VCS) system, in accordance with an embodiment of the present invention.
FIG. 1B illustrates an exemplary VCS system where the member switches are configured in a CLOS network, in accordance with an embodiment of the present invention.
FIG. 2 illustrates the protocol stack within a virtual cluster switch, in accordance with an embodiment of the present invention.
FIG. 3 illustrates an exemplary configuration of a virtual cluster switch, in accordance with an embodiment of the present invention.
FIG. 4 illustrates an exemplary configuration of how a virtual cluster switch can be connected to different edge networks, in accordance with an embodiment of the present invention.
FIG. 5A illustrates how a logical Fibre Channel switch fabric is formed in a virtual cluster switch in conjunction with the example in FIG. 4, in accordance with an embodiment of the present invention.
FIG. 5B illustrates an example of how a logical FC switch can be created within a physical Ethernet switch, in accordance with one embodiment of the present invention.
FIG. 6 illustrates an exemplary VCS configuration database, in accordance with an embodiment of the present invention.
FIG. 7A illustrates an exemplary process of a switch joining a virtual cluster switch, in accordance with an embodiment of the present invention.
FIG. 7B presents a flowchart illustrating the process of a default switch joining a VCS, in accordance with one embodiment of the present invention.
FIG. 7C presents a flowchart illustrating the process of a switch re-joining a previously joined VCS, in accordance with one embodiment of the present invention.
FIG. 7D presents a flowchart illustrating the general operation of a switch during a join process, in accordance with one embodiment of the present invention.
FIG. 8 presents a flowchart illustrating the process of looking up an ingress frame's destination MAC address and forwarding the frame in a VCS, in accordance with one embodiment of the present invention.
FIG. 9 illustrates how data frames and control frames are transported through a VCS, in accordance with one embodiment of the present invention.
FIG. 10 illustrates a logical VCS access layer (VAL) which includes an automatic port profile manager, in accordance with one embodiment of the present invention.
FIG. 11 illustrates an example of the operation of automatic migration of port profiles (AMPP), in accordance with one embodiment of the present invention
FIG. 12A illustrates exemplary port profile contents, in accordance with one embodiment of the present invention.
FIG. 12B illustrates three exemplary port profiles, in accordance with on embodiment of the present invention.
FIG. 13 illustrates how forwarding is achieved between VMs based on port profile membership, in accordance with one embodiment of the present invention.
FIG. 14 presents a flowchart illustrating the process of creating and applying a port profile, in accordance with one embodiment of the present invention.
FIG. 15 illustrates an exemplary VCS member switch, in accordance with one embodiment of the present invention.
FIG. 16 illustrates an exemplary configuration of advanced link tracking in a VCS, in accordance with one embodiment of the present invention.
FIG. 17 illustrates an example where advanced link tracking allows virtual machines to re-route egress traffic when a link fails, in accordance with one embodiment of the present invention.
FIG. 18 presents a flowchart illustrating the process of advance link tracking, in accordance with one embodiment of the present invention.
FIG. 19 illustrates an exemplary switch that facilitates virtual cluster switching and advanced link tracking, in accordance with one embodiment of the present invention.
FIG. 20 illustrates an exemplary VCS network environment with virtual port grouping, in accordance with one embodiment of the present invention.
FIG. 21A illustrates an exemplary data structure for storing virtual port grouping information, in accordance with one embodiment of the present invention.
FIG. 21B illustrates logical virtual networks within a VCS as a result of virtual port grouping, in accordance with one embodiment of the present invention.
FIG. 22 presents a flowchart illustrating the process of enforcing virtual port grouping, in accordance with one embodiment of the present invention.
FIG. 23 illustrates an exemplary switch that facilitates virtual cluster switching with virtual port grouping, in accordance with one embodiment of the present invention.
FIG. 24 illustrates an example of name service operation in a VCS, in accordance with one embodiment of the present invention.
FIG. 25 presents a flowchart illustrating the process of distributing learned MAC information by the Ethernet name service in a VCS, in accordance with one embodiment of the present invention.
FIG. 26 presents a flowchart illustrating the process of distributing information of a learned MAC address via an MCT, in accordance with one embodiment of the present invention.
FIG. 27 presents a flowchart illustrating the process of updating the link state in an MCT group, in accordance with one embodiment of the present invention.
FIG. 28 illustrates an exemplary switch that facilitates formation of a virtual cluster switch with Ethernet and MCT name services, in accordance with an embodiment of the present invention.
FIG. 29 illustrates an exemplary equal cost multi-pathing configuration in a VCS, in accordance with one embodiment of the present invention.
FIG. 30 illustrates an example of VCS congestion notification, in accordance with one embodiment of the present invention.
FIG. 31 illustrates an exemplary hybrid trunk in accordance with one embodiment of the present invention.
FIG. 32 illustrates an exemplary VCS member switch, in accordance with one embodiment of the present invention.
FIG. 33 illustrates an exemplary network architecture which includes CNE devices for facilitate cross-data-center communications, in accordance with one embodiment of the present invention.
FIG. 34 illustrates an exemplary implementation of CNE-enabled VCSs, in accordance with one embodiment of the present invention.
FIG. 35A presents a diagram illustrating how CNE devices handle broadcast, unknown unicast, and multicast (BUM) traffic across data centers, in accordance with one embodiment of the present invention.
FIG. 35B presents a diagram illustrating how CNE devices handle unicast traffic across data centers, in accordance with one embodiment of the present invention.

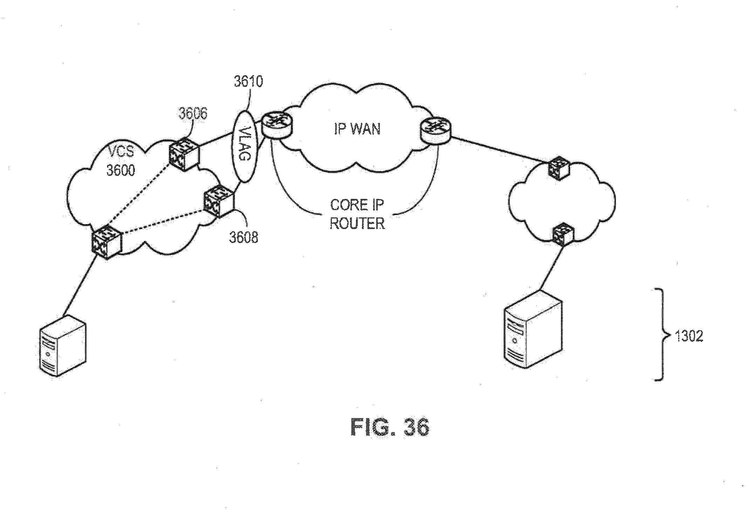

FIG. 36 illustrates an example where two CNE devices are used to construct a vLAG, in accordance with an embodiment of the present invention.
FIG. 37 illustrates an exemplary CNE device, in accordance with one embodiment of the present invention.

### DETAILED DESCRIPTION

The following description is presented to enable any person skilled in the art to make and use the invention, and is provided in the context of a particular application and its requirements. The present invention is not limited to the embodiments shown, but is to be accorded the widest scope consistent with the claims.

### Overview

In embodiments of the present invention, the problem of building a versatile, cost-effective, and scalable switching system is solved by running a control plane with automatic configuration capabilities (such as the Fibre Channel control plane) over a conventional transport protocol, thereby allowing a number of switches to be inter-connected to form a single, scalable logical switch without requiring burdensome manual configuration. As a result, one can form a large-scale logical switch (referred to as a "virtual cluster switch" or VCS herein) using a number of smaller physical switches. The automatic configuration capability provided by the control plane running on each physical switch allows any number of switches to be connected in an arbitrary topology without requiring tedious manual configuration of the ports and links. This feature makes it possible to use many smaller, inexpensive switches to construct a large cluster switch, which can be viewed as a single logical switch externally.

It should be noted that a virtual cluster switch is not the same as conventional switch stacking. In switch stacking, multiple switches are interconnected at a common location (often within the same rack), based on a particular topology, and manually configured in a particular way. These stacked switches typically share a common address, e.g., IP address, so they can be addressed as a single switch externally. Furthermore, switch stacking requires a significant amount of manual configuration of the ports and inter-switch links. The need for manual configuration prohibits switch stacking from being a viable option in building a large-scale switching system. The topology restriction imposed by switch stacking also limits the number of switches that can be stacked. This is because it is very difficult, if not impossible, to design a stack topology that allows the overall switch bandwidth to scale adequately with the number of switch units.

In contrast, a VCS can include an arbitrary number of switches with individual addresses, can be based on an arbitrary topology, and does not require extensive manual configuration. The switches can reside in the same location, or be distributed over different locations. These features overcome the inherent limitations of switch stacking and make it possible to build a large "switch farm" which can be treated as a single, logical switch. Due to the automatic configuration capabilities of the VCS, an individual physical switch can dynamically join or leave the VCS without disrupting services to the rest of the network.

Furthermore, the automatic and dynamic configurability of VCS allows a network operator to build its switching system in a distributed and "pay-as-you-grow" fashion without sacrificing scalability. The VCS's ability to respond to changing network conditions makes it an ideal solution in a virtual computing environment, where network loads often change with time.

Although this disclosure is presented using examples based on the Transparent Interconnection of Lots of Links (TRILL) as the transport protocol and the Fibre Channel (FC) fabric protocol as the control-plane protocol, embodiments of the present invention are not limited to TRILL networks, or networks defined in a particular Open System Interconnection Reference Model (OSI reference model) layer. For example, a VCS can also be implemented with switches running multi-protocol label switching (MPLS) protocols for the transport. In addition, the terms "RBridge" and "switch" are used interchangeably in this disclosure. The use of the term "RBridge" does not limit embodiments of the present invention to TRILL networks only. The TRILL protocol is described in IETF draft "RBridges: Base Protocol Specification," available at http://tools.ietf.org/html/ draft-ietf-trill-rbridge-protocol.

The terms "virtual cluster switch," "virtual cluster switching," and "VCS" refer to a group of interconnected physical switches operating as a single logical switch. The control plane for these physical switches provides the ability to automatically configure a given physical switch, so that when it joins the VCS, little or no manual configuration is required. VCS is not limited to a specific product family from a particular vendor. In addition, "VCS" is not the only term that can be used to name the switching system described herein. Other terms, such as "Ethernet fabric," "Ethernet fabric switch," "fabric switch," "cluster switch," "Ethernet mesh switch," and "mesh switch" can also be used to describe the same switching system. Hence, in some embodiments, these terms and "VCS" can be used interchangeably.

The term "RBridge" refers to routing bridges, which are bridges implementing the TRILL protocol as described in IETF draft "RBridges: Base Protocol Specification." Embodiments of the present invention are not limited to the application among RBridges. Other types of switches, routers, and forwarders can also be used.

The terms "frame" or "packet" refer to a group of bits that can be transported together across a network. "Frame" should not be interpreted as limiting embodiments of the present invention to layer-2 networks. "Packet" should not be interpreted as limiting embodiments of the present invention to layer-3 networks. "Frame" or "packet" can be replaced by other terminologies referring to a group of bits, such as "cell" or "datagram."

### VCS Architecture

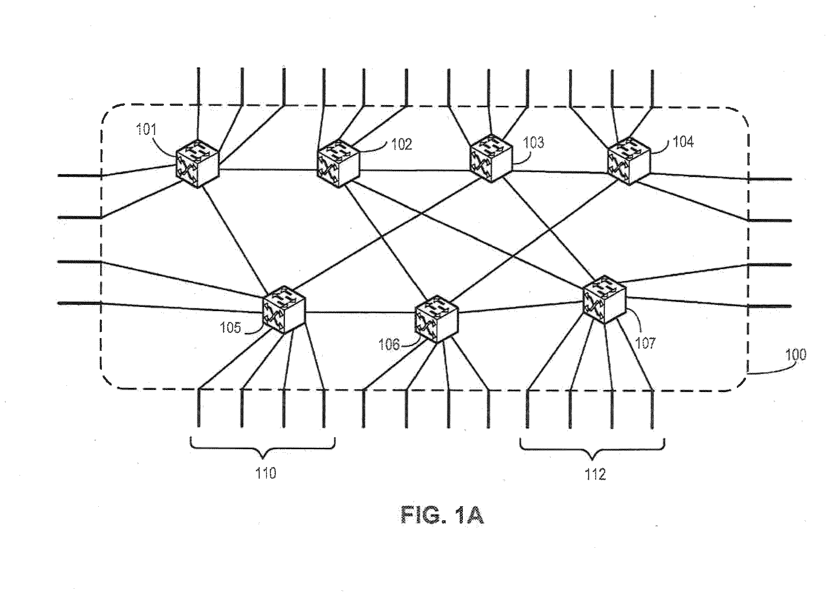

FIG. 1A illustrates an exemplary virtual cluster switch system, in accordance with an embodiment of the present invention. In this example, a VCS 100 includes physical switches 101, 102, 103, 104, 105, 106, and 107. A given physical switch runs an Ethernet-based transport protocol on its ports (e.g., TRILL on its inter-switch ports, and Ethernet transport on its external ports), while its control plane runs an FC switch fabric protocol stack. The TRILL protocol facilitates transport of Ethernet frames within and across VCS 100 in a routed fashion (since TRILL provides routing functions to Ethernet frames). The FC switch fabric protocol stack facilitates the automatic configuration of individual physical switches, in a way similar to how a conventional FC switch fabric is formed and automatically configured. In one embodiment, VCS 100 can appear externally as an ultra-high-capacity Ethernet switch. More details on FC network architecture, protocols, naming/address conventions, and various standards are available in the documentation available from the NCITS/ANSI T11 committee (www.t11.org) and publicly available literature, such as "Designing Storage Area Networks," by Tom Clark, 2nd Ed., Addison Wesley, 2003.

A physical switch may dedicate a number of ports for external use (i.e., to be coupled to end hosts or other switches external to the VCS) and other ports for inter-switch connection. Viewed externally, VCS 100 appears to be one switch to a device from the outside, and any port from any of the physical switches is considered one port on the VCS. For example, port groups 110 and 112 are both VCS external ports and can be treated equally as if they were ports on a common physical switch, although switches 105 and 107 may reside in two different locations.

The physical switches can reside at a common location, such as a data center or central office, or be distributed in different locations. Hence, it is possible to construct a large-scale centralized switching system using many smaller, inexpensive switches housed in one or more chassis at the same location. It is also possible to have the physical switches placed at different locations, thus creating a logical switch that can be accessed from multiple locations. The topology used to interconnect the physical switches can also be versatile. VCS 100 is based on a mesh topology. In further embodiments, a VCS can be based on a ring, tree, or other types of topologies.

In one embodiment, the protocol architecture of a VCS is based on elements from the standard IEEE 802.1Q Ethernet bridge, which is emulated over a transport based on the Fibre Channel Framing and Signaling-2 (FC-FS-2) standard. The resulting switch is capable of transparently switching frames from an ingress Ethernet port from one of the edge switches to an egress Ethernet port on a different edge switch through the VCS.

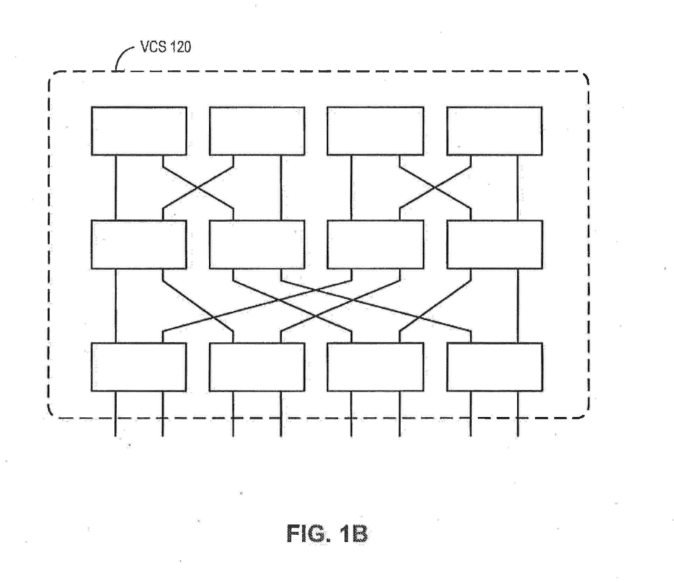

Because of its automatic configuration capability, a VCS can be dynamically expanded as the network demand increases. In addition, one can build a large-scale switch using many smaller physical switches without the burden of manual configuration. For example, it is possible to build a high-throughput fully non-blocking switch using a number of smaller switches. This ability to use small switches to build a large non-blocking switch significantly reduces the cost associated switch complexity. FIG. 1B presents an exemplary VCS with its member switches connected in a CLOS network, in accordance with one embodiment of the present invention. In this example, a VCS 120 forms a fully non-blocking 8x8 switch, using eight 4x4 switches and four 2x2 switches connected in a three-stage CLOS network. A large-scale switch with a higher port count can be built in a similar way.

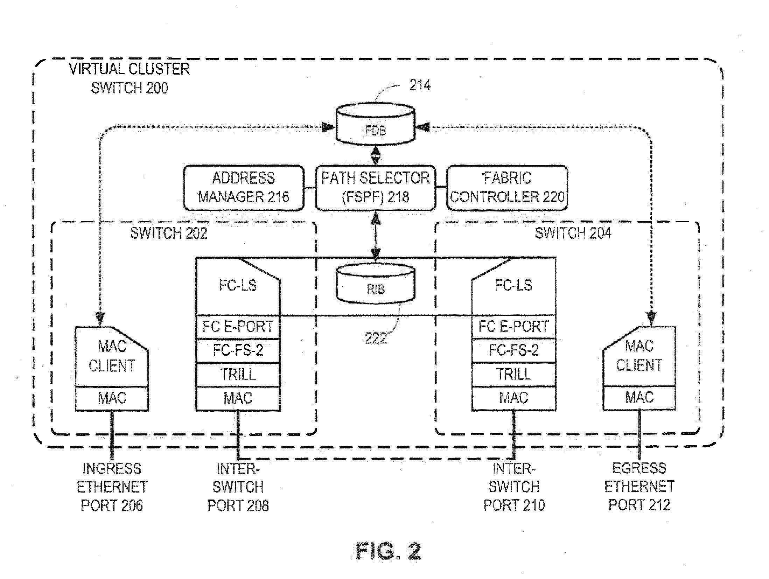

FIG. 2 illustrates the protocol stack within a virtual cluster switch, in accordance with an embodiment of the present invention. In this example, two physical switches 202 and 204 are illustrated within a VCS 200. Switch 202 includes an ingress Ethernet port 206 and an inter-switch port 208. Switch 204 includes an egress Ethernet port 212 and an inter-switch port 210. Ingress Ethernet port 206 receives Ethernet frames from an external device. The Ethernet header is processed by a medium access control (MAC) layer protocol. On top of the MAC layer is a MAC client layer, which hands off the information extracted from the frame's Ethernet header to a forwarding database (FDB) 214. Typically, in a conventional IEEE 802.1Q Ethernet switch, FDB 214 is maintained locally in a switch, which would perform a lookup based on the destination MAC address and the VLAN indicated in the Ethernet frame. The lookup result would provide the corresponding output port. However, since VCS 200 is not one single physical switch, FDB 214 would return the egress switch's identifier (i.e., switch 204's identifier). In one embodiment, FDB 214 is a data structure replicated and distributed among all the physical switches. That is, every physical switch maintains its own copy of FDB 214. When a given physical switch learns the source MAC address and VLAN of an Ethernet frame (similar to what a conventional IEEE 802.1Q Ethernet switch does) as being reachable via the ingress port, the learned MAC and VLAN information, together with the ingress Ethernet port and switch information, is propagated to all the physical switches so every physical switch's copy of FDB 214 can remain synchronized. This prevents forwarding based on state or incorrect information when there are changes to the connectivity of end stations or edge networks to the VCS.

The forwarding of the Ethernet frame between ingress switch 202 and egress switch 204 is performed via inter-switch ports 208 and 210. The frame transported between the two inter-switch ports is encapsulated in an outer MAC header and a TRILL header, in accordance with the TRILL standard. The protocol stack associated with a given inter-switch port includes the following (from bottom up): MAC layer, TRILL layer, FC-FS-2 layer, FC E-Port layer, and FC link services (FC-LS) layer. The FC-LS layer is responsible for maintaining the connectivity information of a physical switch's neighbor, and populating an FC routing information base (RIB) 222. This operation is similar to what is done in an FC switch fabric. The FC-LS protocol is also responsible for handling joining and departure of a physical switch in VCS 200. The operation of the FC-LS layer is specified in the FC-LS standard. t11/member/fc/ls/06-393v5.pdf, the disclosure of which is incorporated herein in its entirety.

During operation, when FDB 214 returns the egress switch 204 corresponding to the destination MAC address of the ingress Ethernet frame, the destination egress switch's identifier is passed to a path selector 218. Path selector 218 performs a fabric shortest-path first (FSPF)-based route lookup in conjunction with RIB 222, and identifies the next-hop switch within VCS 200. In other words, the routing is performed by the FC portion of the protocol stack, similar to what is done in an FC switch fabric.

Also included in each physical switch are an address manager 216 and a fabric controller 220. Address manager 216 is responsible for configuring the address of a physical switch when the switch first joins the VCS. For example, when switch 202 first joins VCS 200, address manager 216 can negotiate a new FC switch domain ID, which is subsequently used to identify the switch within VCS 200. Fabric controller 220 is responsible for managing and configuring the logical FC switch fabric formed on the control plane of VCS 200.

One way to understand the protocol architecture of VCS is to view the VCS as an FC switch fabric with an Ethernet/TRILL transport. Each physical switch, from an external point of view, appears to be a TRILL RBridge. However, the switch's control plane implements the FC switch fabric software. In other words, embodiments of the present invention facilitate the construction of an "Ethernet switch fabric" running on FC control software. This unique combination provides the VCS with automatic configuration capability and allows it to provide the ubiquitous Ethernet services in a very scalable fashion.

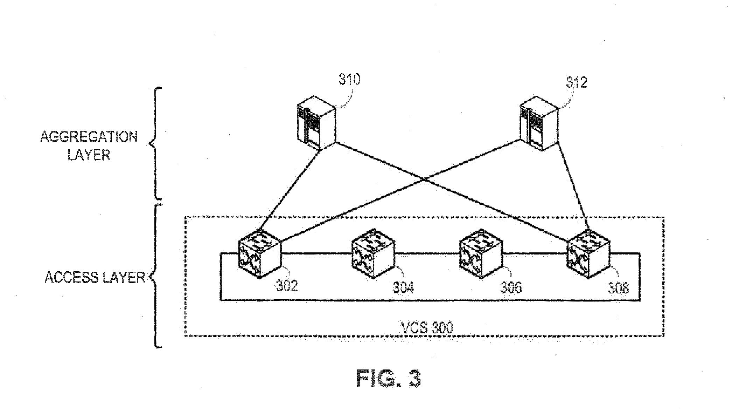

FIG. 3 illustrates an exemplary configuration of a virtual cluster switch, in accordance with an embodiment of the present invention. In this example, a VCS 300 includes four physical switches 302, 304, 306, and 308. VCS 300 constitutes an access layer which is coupled to two aggregation switches 310 and 312. Note that the physical switches within VCS 300 are connected in a ring topology. Aggregation switch 310 or 312 can connect to any of the physical switches within VCS 300. For example, aggregation switch 310 is coupled to physical switches 302 and 308. These two links are viewed as a trunked link to VCS 300, since the corresponding ports on switches 302 and 308 are considered to be from the same logical switch, VCS 300. Note that, without VCS, such topology would not have been possible, because the FDB needs to remain synchronized, which is facilitated by the VCS.

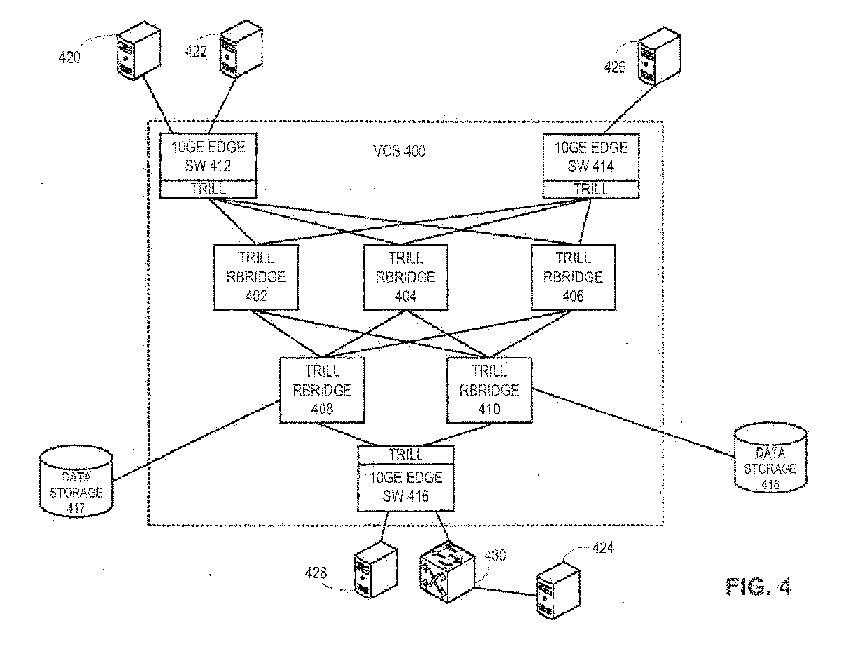

FIG. 4 illustrates an exemplary configuration of how a virtual cluster switch can be connected to different edge networks, in accordance with an embodiment of the present invention. In this example, a VCS 400 includes a number of TRILL RBridges 402, 404, 406, 408, and 410, which are controlled by the FC switch-fabric control plane. Also included in VCS 400 are RBridges 412, 414, and 416. Each RBridge has a number of edge ports which can be connected to external edge networks.

For example, RBridge 412 is coupled with hosts 420 and 422 via 10GE ports. RBridge 414 is coupled to a host 426 via a 10GE port. These RBridges have TRILL-based inter-switch ports for connection with other TRILL RBridges in VCS 400. Similarly, RBridge 416 is coupled to host 428 and an external Ethernet switch 430, which is coupled to an external network that includes a host 424. In addition, network equipment can also be coupled directly to any of the physical switches in VCS 400. As illustrated here, TRILL RBridge 408 is coupled to a data storage 417, and TRILL RBridge 410 is coupled to a data storage 418.

Although the physical switches within VCS 400 are labeled as "TRILL RBridges," they are different from the conventional TRILL RBridge in the sense that they are controlled by the FC switch fabric control plane. In other words, the assignment of switch addresses, link discovery and maintenance, topology convergence, routing, and forwarding can be handled by the corresponding FC protocols. Particularly, each TRILL RBridge's switch ID or nickname is mapped from the corresponding FC switch domain ID, which can be automatically assigned when a switch joins VCS 400 (which is logically similar to an FC switch fabric).

Note that TRILL is only used as a transport between the switches within VCS 400. This is because TRILL can readily accommodate native Ethernet frames. Also, the TRILL standards provide a ready-to-use forwarding mechanism that can be used in any routed network with arbitrary topology (although the actual routing in VCS is done by the FC switch fabric protocols). Embodiments of the present invention should be not limited to using only TRILL as the transport. Other protocols (such as multi-protocol label switching (MPLS) or Internet Protocol (IP)), either public or proprietary, can also be used for the transport.

### VCS Formation

In one embodiment, a VCS is created by instantiating a logical FC switch in the control plane of each switch. After the logical FC switch is created, a virtual generic port (denoted as G_Port) is created for each Ethernet port on the RBridge. A G_Port assumes the normal G_Port behavior from the FC switch perspective. However, in this case, since the physical links are based on Ethernet, the specific transition from a G_Port to either an FC F_Port or E_Port is determined by the underlying link and physical layer protocols. For example, if the physical Ethernet port is connected to an external device which lacks VCS capabilities, the corresponding G_Port will be turned into an F_Port. On the other hand, if the physical Ethernet port is connected to a switch with VCS capabilities and it is confirmed that the switch on the other side is part of a VCS, then the G_Port will be turned into an E_port.

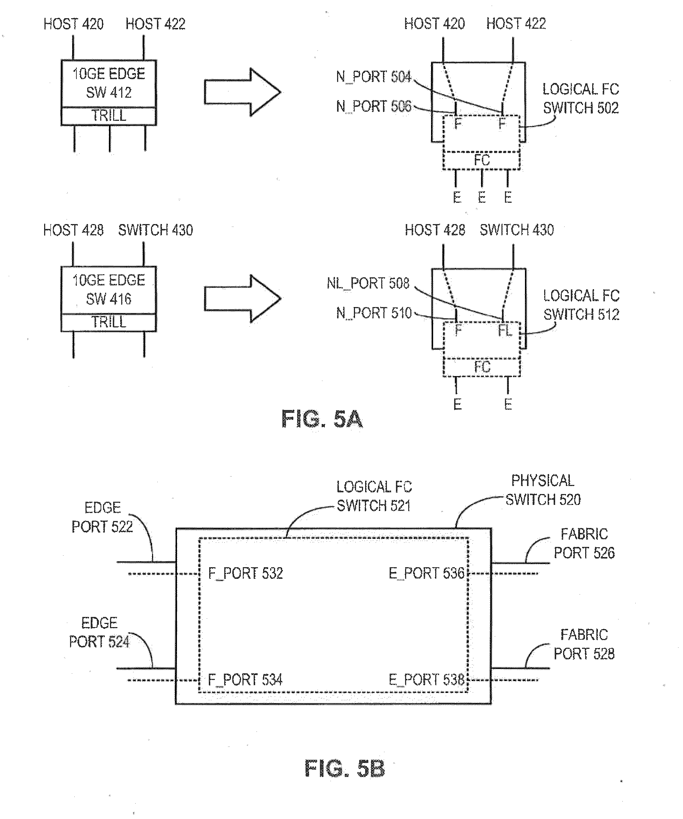

FIG. 5A illustrates how a logical Fibre Channel switch fabric is formed in a virtual cluster switch in conjunction with the example in FIG. 4, in accordance with an embodiment of the present invention. RBridge 412 contains a virtual, logical FC switch 502. Corresponding to the physical Ethernet ports coupled to hosts 420 and 422, logical FC switch 502 has two logical F_Ports, which are logically coupled to hosts 420 and 422. In addition, two logical N_Ports, 506 and 504, are created for hosts 420 and 422, respectively. On the VCS side, logical FC switch 502 has three logical E_Ports, which are to be coupled with other logical FC switches in the logical FC switch fabric in the VCS.

Similarly, RBridge 416 contains a virtual, logical FC switch 512. Corresponding to the physical Ethernet ports coupled to host 428 and external switch 430, logical FC switch 512 has a logical F_Port coupled to host 428, and a logical FL_Port coupled to switch 430. In addition, a logical N_Port 510 is created for host 428, and a logical NL_Port 508 is created for switch 430. Note that the logical FL_Port is created because that port is coupled to a switch (switch 430), instead of a regular host, and therefore logical FC switch 512 assumes an arbitrated loop topology leading to switch 430. Logical NL_Port 508 is created based on the same reasoning to represent a corresponding NL_Port on switch 430. On the VCS side, logical FC switch 512 has two logical E_Ports, which to be coupled with other logical FC switches in the logical FC switch fabric in the VCS.

FIG. 5B illustrates an example of how a logical FC switch can be created within a physical Ethernet switch, in accordance with one embodiment of the present invention. The term "fabric port" refers to a port used to couple multiple switches in a VCS. The clustering protocols control the forwarding between fabric ports. The term "edge port" refers to a port that is not currently coupled to another switch unit in the VCS. Standard IEEE 802.1Q and layer-3 protocols control forwarding on edge ports.

In the example illustrated in FIG. 5B, a logical FC switch 521 is created within a physical switch (RBridge) 520. Logical FC switch 521 participates in the FC switch fabric protocol via logical inter-switch links (ISLs) to other switch units and has an FC switch domain ID assigned to it just as a physical FC switch does. In other words, the domain allocation, principal switch selection, and conflict resolution work just as they would on a physical FC ISL.

The physical edge ports 522 and 524 are mapped to logical F_Ports 532 and 534, respectively. In addition, physical fabric ports 526 and 528 are mapped to logical E_Ports 536 and 538, respectively. Initially, when logical FC switch 521 is created (for example, during the boot-up sequence), logical FC switch 521 only has four G_Ports which correspond to the four physical ports. These G_Ports are subsequently mapped to F_Ports or E_Ports, depending on the devices coupled to the physical ports.

Neighbor discovery is the first step in VCS formation between two VCS-capable switches. It is assumed that the verification of VCS capability can be carried out by a handshake process between two neighbor switches when the link is first brought up.

### Distributed Configuration Management

In general, a VCS presents itself as one unified switch composed of multiple member switches. Hence, the creation and configuration of VCS is of critical importance. The VCS configuration is based on a distributed database, which is replicated and distributed over all switches. In other words, each VCS member switch maintains a copy of the VCS configuration database, and any change to the database is propagated to all the member switches. As a result, a network administrator can configure any part of the VCS from anywhere by, for example, executing a command line interface (CLI) command from any member switch.

In one embodiment, a VCS configuration database includes a global configuration table (GT) of the VCS and a list of switch description tables (STs), each of which describes a VCS member switch. In its simplest form, a member switch can have a VCS configuration database that includes a global table and one switch description table, e.g., [<GT><ST>]. A VCS with multiple switches will have a configuration database that has a single global table and multiple switch description tables, e.g., [<GT><ST0><ST1>...<ST*n-1*>]. The number n corresponds to the number of member switches in the VCS. In one embodiment, the GT can include at least the following information: the VCS ID, number of nodes in the VCS, a list of VLANs supported by the VCS, a list of all the switches (e.g., list of FC switch domain IDs for all active switches) in the VCS, and the FC switch domain ID of the principal switch (as in a logical FC switch fabric). A switch description table can include at least the following information: the IN_VCS flag, indication whether the switch is a principal switch in the logical FC switch fabric, the FC switch domain ID for the switch, the FC world-wide name (WWN) for the corresponding logical FC switch; the mapped ID of the switch, and optionally the IP address of the switch. Note that, as explained below, a switch can have an IP address dynamically assigned to it when it joins the VCS. The IP address can be derived from and have a one-to-one mapping to the FC switch domain ID assigned to the switch.

In addition, each switch's global configuration database is associated with a transaction ID. The transaction ID specifies the latest transaction (e.g., update or change) incurred to the global configuration database. The transaction IDs of the global configuration databases in two switches can be compared to determine which database has the most current information (i.e., the database with the more current transaction ID is more up-to-date). In one embodiment, the transaction ID is the switch's serial number plus a sequential transaction number. This configuration can unambiguously resolve which switch has the latest configuration.

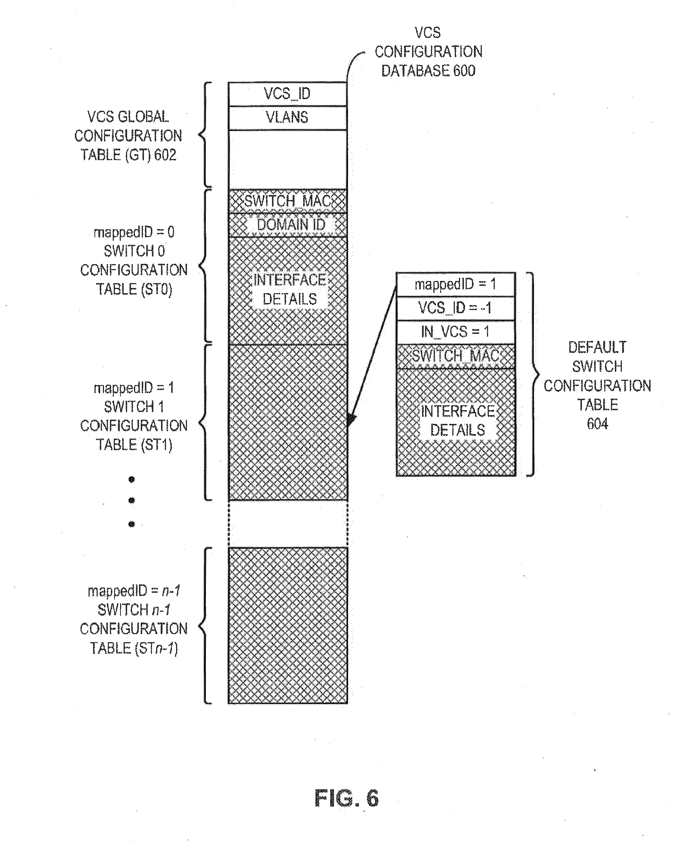

As illustrated in FIG. 6, a VCS member switch typically maintains two configuration tables that describe its instance: a VCS configuration database 600, and a default switch configuration table 604. VCS configuration database 600 describes the VCS configuration when the switch is part of a VCS. Default switch configuration table 604 describes the switch's default configuration. VCS configuration database 600 includes a GT 602, which includes a VCS identifier (denoted as VCS_ID) and a VLAN list within the VCS. Also included in VCS configuration database 600 are a number of STs, such as ST0, ST1, and STn. Each ST includes the corresponding member switch's MAC address and FC switch domain ID, as well as the switch's interface details. Note that each switch also has a VCS-mapped ID which is a switch index within the VCS.

In one embodiment, each switch also has a VCS-mapped ID (denoted as "mappedID"), which is a switch index within the VCS. This mapped ID is unique and persistent within the VCS. That is, when a switch joins the VCS for the first time, the VCS assigns a mapped ID to the switch. This mapped ID persists with the switch, even if the switch leaves the VCS. When the switch joins the VCS again at a later time, the same mapped ID is used by the VCS to retrieve previous configuration information for the switch. This feature can reduce the amount of configuration overhead in VCS. Also, the persistent mapped ID allows the VCS to "recognize" a previously configured member switch when it re-joins the VCS, since a dynamically assigned FC fabric domain ID would change each time the member switch joins and is configured by the VCS.

Default switch configuration table 604 has an entry for the mappedID that points to the corresponding ST in VCS configuration database 600. Note that only VCS configuration database 600 is replicated and distributed to all switches in the VCS. Default switch configuration table 604 is local to a particular member switch.

The "IN_VCS" value in default switch configuration table 604 indicates whether the member switch is part of a VCS. A switch is considered to be "in a VCS" when it is assigned one of the FC switch domains by the FC switch fabric with two or more switch domains. If a switch is part of an FC switch fabric that has only one switch domain, i.e., its own switch domain, then the switch is considered to be "not in a VCS."

When a switch is first connected to a VCS, the logical FC switch fabric formation process allocates a new switch domain ID to the joining switch. In one embodiment, only the switches directly connected to the new switch participate in the VCS join operation.

Note that in the case where the global configuration database of a joining switch is current and in sync with the global configuration database of the VCS based on a comparison of the transaction IDs of the two databases (e.g., when a member switch is temporarily disconnected from the VCS and re-connected shortly afterward), a trivial merge is performed. That is, the joining switch can be connected to the VCS, and no change or update to the global VCS configuration database is required.

When a switch joins a VCS (see the description below), the VCS assigns an FC switch domain ID to the logical FC switch formed within the joining switch. The joining switch can be automatically assigned an IP address (which in one embodiment can be internal to the VCS) corresponding to the FC switch domain ID. For example, the joining switch's IP address can be 127.10.10.FC_domain_ID. In addition, each port on the joining switch can be automatically assigned a MAC address which is unique to that port, on that switch. For instance, a port on the joining switch can be assigned a MAC address of OUI:FC_domain_ID:0:0, where OUI is the Organizationally Unique Identifier for the port, and FC_domain_ID is the switch domain ID assigned to the logical FC switch. The IP and MAC address assignment process can be part of the software within the switch which controls the FC switch formation and the join/merge process.

The automatically assigned switch IP address and port MAC address for a given VCS member switch allow any port on the switch to be remotely configured from anywhere within the VCS. For example, a configuration command of a given member switch can be issued from a host connected to any member switch in the VCS and identifies the switch to be configured by its IP address and optionally one or more port MAC addresses. Such configuration command might include information on VLAN configuration, quality-of-service (QoS) configuration, and/or access-control configuration, each of which can be port-specific. In one embodiment, the change to a switch's configuration is tentatively transmitted to the switch. After the switch confirms and validates the change, a commit-change command is transmitted to all the member switches in the VCS, so the global configuration database can be updated throughout the VCS. In a further embodiment, the change is tentatively transmitted to all the member switches in the VCS, and the commit-change command is only sent out after all the switches confirm and validate the tentatively change.

### VCS Join and Merge

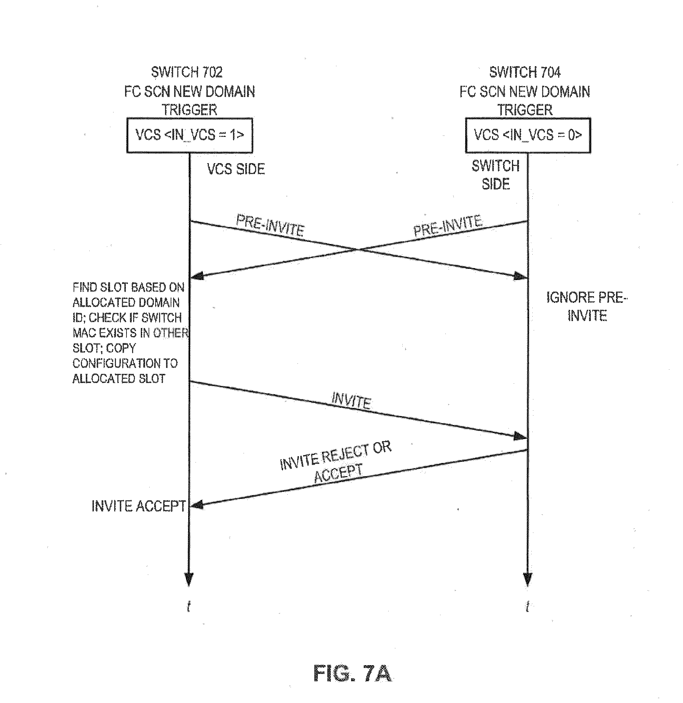

FIG. 7A illustrates an exemplary process of a switch joining a virtual cluster switch, in accordance with an embodiment of the present invention. In this example, it is assumed that a switch 702 is within an existing VCS, and a switch 704 is joining the VCS. During operation, both switches 702 and 704 trigger an FC State Change Notification (SCN) process. Subsequently, both switches 702 and 704 perform a PRE-INVITE operation. The pre-invite operation involves the following process.

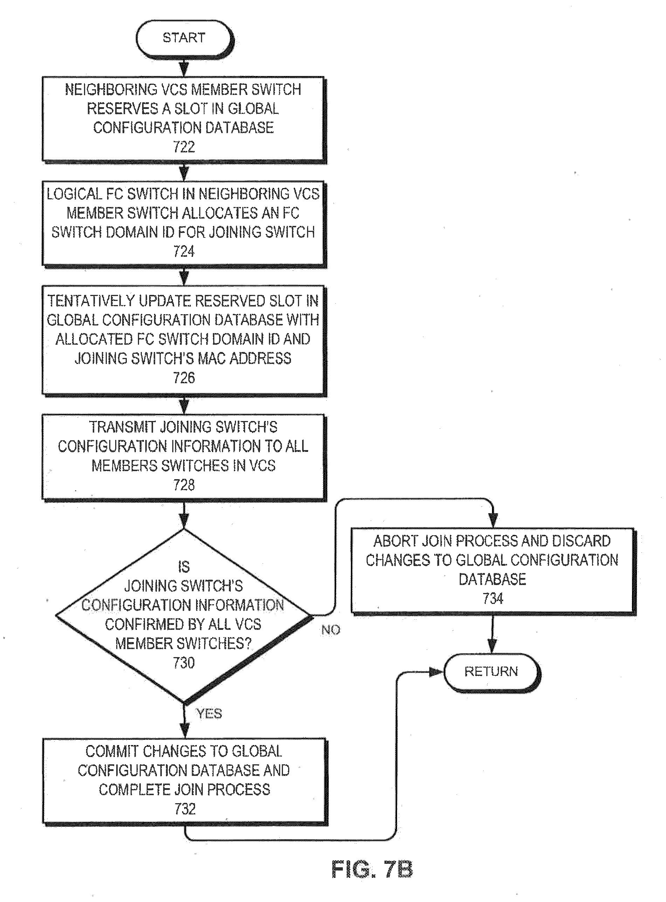

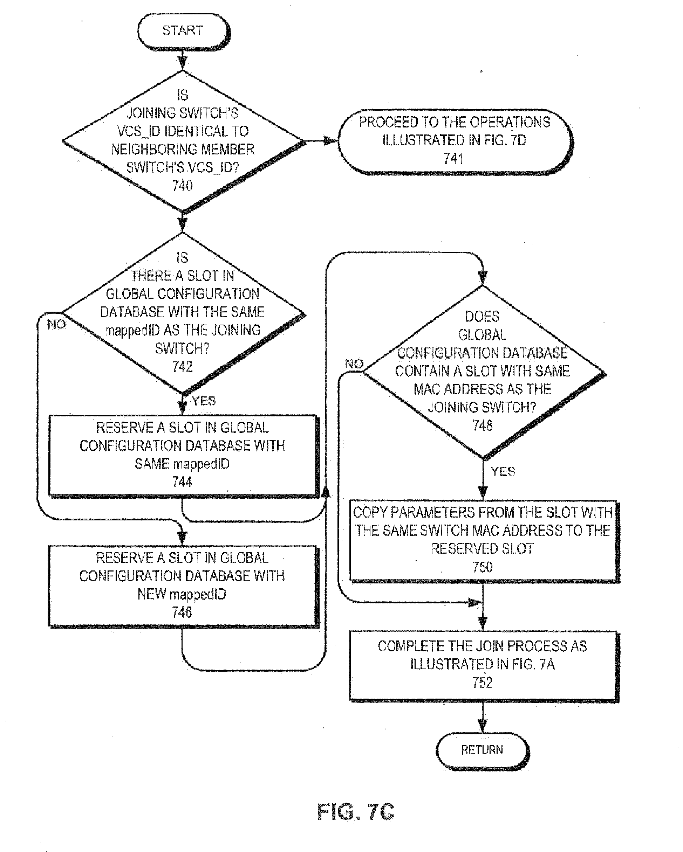

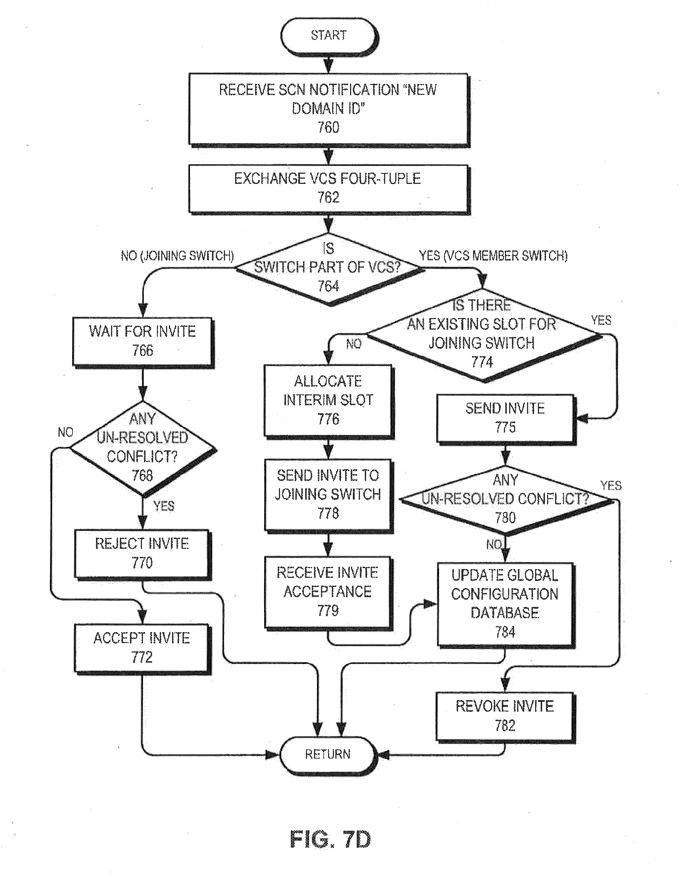

When a switch joins the VCS via a link, both neighbors on each end of the link present to the other switch a VCS four-tuple of <Prior VCS_ID, SWITCH_MAC, mappedID, IN_VCS> from a prior incarnation, if any. Otherwise, the switch presents to the counterpart a default tuple. If the VCS_ID value was not set from a prior join operation, a VCS_ID value of - 1 is used. In addition, if a switch's IN_VCS flag is set to 0, it sends out its interface configuration to the neighboring switch. In the example in FIG. 7, both switches 702 and 704 send the above information to the other switch.

After the above PRE-INVITE operation, a driver switch for the join process is selected. By default, if a switch's IN_VCS value is 1 and the other switch's IN_VCS value is 0, the switch with IN_VCS = 1 is selected as the driver switch. If both switches have their IN_VCS values as 1, then nothing happens, i.e., the PRE-INVITE operation would not lead to an INVITE operation. If both switches have their IN_VCS values as 0, then one of the switches is elected to be the driving switch (for example, the switch with a lower FC switch domain ID value). The driving switch's IN_VCS value is then set to 1 and drives the join process.

After switch 702 is selected as the driver switch, switch 702 then attempts to reserve a slot in the VCS configuration database corresponding to the mappedID value in switch 704's PRE-INVITE information. Next, switch 702 searches the VCS configuration database for switch 704's MAC address in any mappedID slot. If such a slot is found, switch 702 copies all information from the identified slot into the reserved slot. Otherwise, switch 702 copies the information received during the PRE-INVITE from switch 704 into the VCS configuration database. The updated VCS configuration database is then propagated to all the switches in the VCS as a prepare operation in the database (note that the update is not committed to the database yet).

Subsequently, the prepare operation may or may not result in configuration conflicts, which may be flagged as warnings or fatal errors. Such conflicts can include inconsistencies between the joining switch's local configuration or policy setting and the VCS configuration. For example, a conflict arises when the joining switch is manually configured to allow packets with a particular VLAN value to pass through, whereas the VCS does not allow this VLAN value to enter the switch fabric from this particular RBridge (for example, when this VLAN value is reserved for other purposes). In one embodiment, the prepare operation is handled locally and/or remotely in concert with other VCS member switches. If there is an un-resolvable conflict, switch 702 sends out a PRE-INVITE-FAILED message to switch 704. Otherwise, switch 702 generates an INVITE message with the VCS's merged view of the switch (i.e., the updated VCS configuration database).

Upon receiving the INVITE message, switch 704 either accepts or rejects the INVITE. The INVITE can be rejected if the configuration in the INVITE is in conflict with what switch 704 can accept. If the INVITE is acceptable, switch 704 sends back an INVITE-ACCEPT message in response. The INVITE-ACCEPT message then triggers a final database commit throughout all member switches in the VCS. In other words, the updated VCS configuration database is updated, replicated, and distributed to all the switches in the VCS.

If more than one switch in a VCS has connectivity to the new joining switch, all these neighboring member switches may send PRE-INVITE to the new joining switch. The joining switch can send out only one PRE-INVITE to a randomly selected neighboring member switch to complete the join process. Various use cases of the join process are described below. In the following description, a "joining switch" refers to a switch attempting to join a VCS. A "neighboring VCS member switch" or "neighboring member switch" refers to a VCS member switch to which the joining switch is connected.

VCS pre-provisioned to accept a switch. A VCS is pre-configured (e.g., the global configuration database) with the MAC address of a joining switch with an optionally pre-allocated mapped ID for the joining switch. The joining switch may be allowed to carry any value in the VCS_ID field of its existing configuration. The neighboring VCS member switch can assign an FC switch domain ID and the proper VCS ID to the joining switch in the INVITE message. In one embodiment, the joining switch may be pre-provisioned to join an existing VCS (e.g., with the parameters in the default switch configuration table, such as mappedID, VCS_ID, and IN_VCS, populated with values corresponding to the VCS). If the pre-provisioned parameters do not guarantee a slot with the same mappedID in the global configuration database when the switch joins the VCS, the switch can revert to the default joining procedure described below.

Default switch joins a VCS. A default switch is one that has no records of any previous joining with a VCS. A switch can become a default switch if it is forced into a factory default state. A joining default switch can present its initial configuration information (for example, its interface configuration details) to a neighboring VCS member switch. In one embodiment, a slot in the VCS configuration database is selected based on a monotonically incrementing number, which is used as the mapped ID for the joining switch. The corresponding FC switch domain ID which is allocated to the joining switch and the joining switch's MAC is updated accordingly in this slot. The neighboring VCS member switch then initiates a prepare transaction, which propagates to all VCS member switches and requires an explicit validation of the joining switch's configuration information from each VCS member switch. If the prepare transaction fails, a PRE-INVITE-FAILED message is sent to the joining switch and the joining process is aborted.

FIG. 7B presents a flowchart illustrating the process of a default switch joining a VCS, in accordance with one embodiment of the present invention. During operation, after a joining switch with default configuration is connected to a neighboring VCS member switch, the VCS member switch reserves a slot in the global configuration database (operation 722). The reserved slot corresponds to a mappedID value which is also assigned to the joining switch. Subsequently, the logical FC switch within the neighboring VCS member switch allocates an FC switch domain ID for the joining switch (operation 724). This operation resembles a similar fabric login operation in the FC switch fabric join process.

The neighboring VCS member switch then tentatively updates the reserved slot in the global configuration database with the allocated FC switch domain ID and the joining switch's MAC address (operation 726). Next, the neighboring VCS member switch transmits the joining switch's tentative configuration to all member switches in the VCS (operation 728), and determines whether the joining switch's configuration information is confirmed and validated by all VCS member switches (operation 730). If the joining switch's configuration is confirmed, the neighboring member switch then commits the changes to the global configuration database and completes the join process (operation 732). Otherwise, the join process is aborted and the tentative changes to the global configuration database are discarded (operation 734).

Switch re-joins a previously joined VCS. If for some reason a switch is joining a VCS to which the switch previously belongs (for example, due to a link failure), the FC switch domain ID that is re-allocated to the joining switch will most likely be the same. When such a switch joins the VCS, the neighboring VCS member switch first checks whether the joining switch's VCS_ID is the same as the existing VCS_ID on the member switch. If the two VCS_ID values are the same, the neighboring member switch attempts to find a slot in the global configuration database with the same mappedID value which was received from the joining switching during the tuple-exchange process. If such a slot in the global database is available, the slot is reserved for the joining switch. In addition, the global configuration database is searched for a match to the joining switch's MAC address. If a match is found in another slot, the configuration information from that slot is copied to the reserved slot. Subsequently, the join process continues as described in FIG. 7A. If the two VCS_ID values are different, the system performs a join process as described blow for the use case "switch joins another VCS."

FIG. 7C presents a flowchart illustrating the process of a switch re-joining a previously joined VCS, in accordance with one embodiment of the present invention. During operation, a neighboring member switch first determines whether the joining switch's existing VCS_ID is the same as the neighboring member switch's VCS_ID (operation 740). If the two VCS_IDs are different, the joining process proceeds to the operations illustrated in FIG. 7D (operation 741). If the two VCS_IDs are the same, which means that the joining switch has previously been part of the same VCS, the neighboring member switch further determines whether there is a slot in the global configuration database with the same mappedID as the joining switch (operation 742). If so, the neighboring member switch reserves a slot in the global configuration database with the same mappedID (operation 744). Otherwise, the neighboring member switch reserves a slot in the global configuration database with a new mappedID, which is also communicated to the joining switch (operation 746).

Subsequently, the neighboring member switch determines whether the global configuration database contains a slot with the same MAC address as the joining switch (operation 748). If there is such a slot, which means that the global configuration database contains a slot which has been used previously for the same joining switch's configuration information, such information is copied from the idenfied slot to the reserved slot (operation 750). Otherwise, the neighboring member switch proceeds to complete the join process as illustrated in FIG. 7A.

Switch joins another VCS. This use case occurs when a switch is disconnected from one VCS and then connected to a different VCS without being reset to the default state. This scenario can also occur when a switch is connected to a VCS while it is participating in another VCS. In such cases, there will be a VCS_ID mismatch in the join process. In addition, the IN_VCS field in the joining switch's configuration table might or might not be set. If the IN_VCS field is not set, which means that the joining switch is not currently participating in a VCS, the join process can assign the switch a new VCS_ID corresponding to the VCS the switch is joining. In one embodiment, if the IN_VCS filed is set in the joining switch's configuration, which means that the joining switch is currently participating in a different VCS, the join process is disallowed. Optionally, the joining switch can complete the joining process after being set to the default state.

Initial joining of two switches which are both not in a VCS. When two switches are connected together and both of them are not in a VCS, an election process can be used to let one of them be the driving switch in the VCS formation process. In one embodiment, the switch with a lower FC switch domain ID would have its IN_VCS field set to "1" and drives the join process.

Joining of two VCSs. In one embodiment, two VCSs are allowed to merge together. Similar to the FC switch fabric formation process, the logical FC switches in both VCSs would select a new principal FC switch. This newly selected principal FC switch then re-assigns FC switch domain IDs to all the member switches. After the FC switch domain IDs are assigned, a "fabric up" message which is broadcast to all the member switches starts the VCS join process.

During the join process, the principal FC switch's IN_VCS field is set to "1," whereas all other member switches' IN_VCS fields are set to "0." Subsequently, each member switch can join the VCS (which initially only contains the switch with the principal FC switch) using the "switch joins another VCS" procedure described above.

Removal of a switch from VCS. When a switch is removed from a VCS, its neighboring member switch typically receives a "domain-unreachable" notification at its logical FC switch. Upon receiving this notification, the neighboring member switch disables this switch from the global VCS configuration database and propagates this change to all other member switches. Optionally, the neighboring member switch does not clear the slot previously used by the removed switch in the global configuration database. This way, if the departure of the switch is only temporary, the same slot in the configuration database can still be used when the switch re-joins the VCS.

If the VCS is temporarily disjoint due to a link failure, the logical FC infrastructure in the member switches can detect the disconnection of the switch(es) and issues a number of "domain-unreachable" notifications. When the disjoint switch is reconnected to the VCS, a comparison between the switch's configuration information and the corresponding slot information in the global VCS configuration database allows the switch to be added to the VCS using the same slot (i.e., the slot with the same mappedID) in the global configuration database.

General operation. FIG. 7D presents a flowchart illustrating the general operation of a switch during a join process, in accordance with one embodiment of the present invention. This operation applies to both a joining switch and a neighboring VCS member switch. At the beginning of a join process, the logical FC switch within a switch receives an SCN notification on a newly detected switch domain ID on a link (operation 760). The system then exchanges the VCS four-tuple with the neighbor switch (operation 762). Subsequently, the system determines whether itself is part of a VCS (i.e., whether its IN_VCS = 1) (operation 764). If the system is not part of a VCS (which means the local switch is attempting to join a VCS), the system then waits for an INVITE from the neighbor member switch (operation 766). After the INVITE is received, the system determines whether the configuration information in the INVITE causes any un-resolved conflict with the local switch (operation 768). If there is an un-resolved conflict, the system rejects the INVITE (operation 770). Otherwise, the system accepts the INVITE (operation 772).

If the system determines that itself is already part of a VCS (i.e., its IN_VCS = 1) (operation 764), the system then further determines whether there is an existing slot in the global configuration database with the same mappedID as the joining switch (operation 774). If such a slot exists, the system then sends the INVITE to the joining switch (operation 775) and determines whether there is any un-resolved conflict between the configuration information stored in this slot and the information provided by the joining switch (operation 780). If so, the system revokes the INVITE (operation 782). Otherwise, the system updates the global configuration database with the joining switch's configuration information and propagates the update to all other member switches (operation 784).

If there is no slot in the global configuration database with the same mappedID as the joining switch (operation 774), the system allocates an interim slot in the global configuration database (operation 776), and sends an INVITE to the joining switch (operation 778). After receiving an INVITE acceptance from the joining switch (operation 779), the system then updates the global configuration database (operation 784) and completes the join process.

### Layer-2 Services in VCS

In one embodiment, each VCS switch unit performs source MAC address learning, similar to what an Ethernet bridge does. Each {MAC address, VLAN} tuple learned on a physical port on a VCS switch unit is registered into the local Fibre Channel Name Server (FC-NS) via a logical Nx_Port interface corresponding to that physical port. This registration binds the address learned to the specific interface identified by the Nx_Port. Each FC-NS instance on each VCS switch unit coordinates and distributes all locally learned {MAC address, VLAN} tuples with every other FC-NS instance in the fabric. This feature allows the dissemination of locally learned {MAC addresses, VLAN} information to every switch in the VCS. In one embodiment, the learned MAC addresses are aged locally by individual switches.

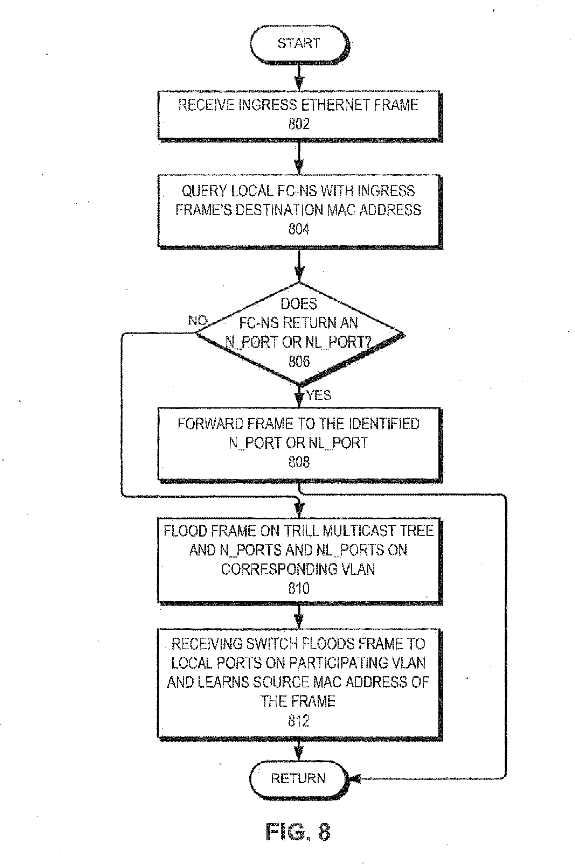

FIG. 8 presents a flowchart illustrating the process of looking up an ingress frame's destination MAC address and forwarding the frame in a VCS, in accordance with one embodiment of the present invention. During operation, a VCS switch receives an Ethernet frame at one of its Ethernet ports (operation 802). The switch then extracts the frame's destination MAC address and queries the local FC Name Server (operation 804). Next, the switch determines whether the FC-NS returns an N_Port or an NL_Port identifier that corresponds to an egress Ethernet port (operation 806).

If the FC-NS returns a valid result, the switch forwards the frame to the identified N_Port or NL_Port (operation 808). Otherwise, the switch floods the frame on the TRILL multicast tree as well as on all the N_Ports and NL_Ports that participate in that VLAN (operation 810). This flood/broadcast operation is similar to the broadcast process in a conventional TRILL RBridge, wherein all the physical switches in the VCS will receive and process this frame, and learn the source address corresponding to the ingress RBridge. In addition, each receiving switch floods the frame to its local ports that participate in the frame's VLAN (operation 812). Note that the above operations are based on the presumption that there is a one-to-one mapping between a switch's TRILL identifier (or nickname) and its FC switch domain ID. There is also a one-to-one mapping between a physical Ethernet port on a switch and the corresponding logical FC port.

### End-to-End Frame Delivery

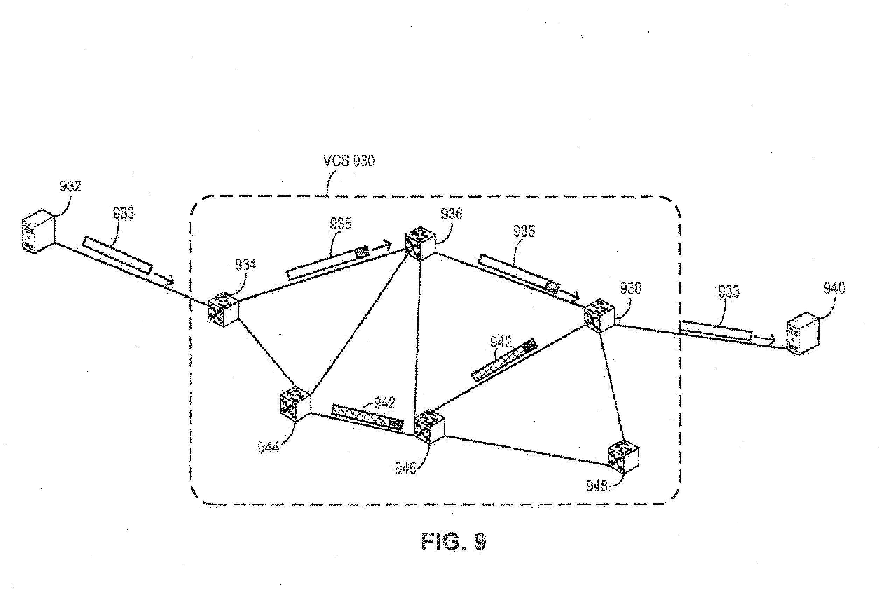

FIG. 9 illustrates how data frames and control frames are transported in a VCS, in accordance with an embodiment of the present invention. In this example, a VCS 930 includes member switches 934, 936, 938, 944, 946, and 948. An end host 932 is communicating with an end host 940. Switch 934 is the ingress VCS member switch corresponding to host 932, and switch 938 is the egress VCS member switch corresponding to host 938. During operation, host 932 sends an Ethernet frame 933 to host 940. Ethernet frame 933 is first encountered by ingress switch 934. Upon receiving frame 933, switch 934 first extracts frame 933's destination MAC address. Switch 934 then performs a MAC address lookup using the Ethernet name service, which provides the egress switch identifier (i.e., the RBridge identifier of egress switch 938). Based on the egress switch identifier, the logical FC switch in switch 934 performs a routing table lookup to determine the next-hop switch, which is switch 936, and the corresponding output port for forwarding frame 933. The egress switch identifier is then used to generate a TRILL header (which specifies the destination switch's RBridge identifier), and the next-hop switch information is used to generate an outer Ethernet header. Subsequently, switch 934 encapsulates frame 933 with the proper TRILL header and outer Ethernet header, and sends the encapsulated frame 935 to switch 936. Based on the destination RBridge identifier in the TRILL header of frame 935, switch 936 performs a routing table lookup and determines the next hop. Based on the next-hop information, switch 936 updates frame 935's outer Ethernet header and forwards frame 935 to egress switch 938.

Upon receiving frame 935, switch 938 determines that it is the destination RBridge based on frame 935's TRILL header. Correspondingly, switch 938 strips frame 935 of its outer Ethernet header and TRILL header, and inspects the destination MAC address of its inner Ethernet header. Switch 938 then performs a MAC address lookup and determines the correct output port leading to host 940. Subsequently, the original Ethernet frame 933 is transmitted to host 940.

As described above, the logical FC switches within the physical VCS member switches may send control frames to one another (for example, to update the VCS global configuration database or to notify other switches of the learned MAC addresses). In one embodiment, such control frames can be FC control frames encapsulated in a TRILL header and an outer Ethernet header. For example, if the logical FC switch in switch 944 is in communication with the logical FC switch in switch 938, switch 944 can sends a TRILL-encapsulated FC control frame 942 to switch 946. Switch 946 can forward frame 942 just like a regular data frame, since switch 946 is not concerned with the payload in frame 942.

### Automatic Port Profile Management

Today's server virtualization infrastructure (e.g. a Hypervisor, also called virtual machine monitor) associates a server side (e.g. Hypervisor or adapter) Virtual Ethernet Bridge (VEB) port profile to each Ethernet MAC address used by a virtual machine (VM) to access the network through a VEB port. Examples of the VEB's port profile attributes includes: the types of frames allowed on the port (e.g. all frames, only frames tagged with certain VLAN values, or untagged frames), the VLAN identifiers that are allowed to be used, and rate limiting attributes (e.g. port or access-control based rate limits). In today's server virtualization infrastructure, if the VM migrates from one physical server to another, the VEB's port profile migrates with it. In other words, today's server virtualization infrastructure provides automated port profile migration of the server's VEB port(s) that are associated with a VM.

However, in existing technologies, there remains a gap between the access and Quality of Service (QoS) controls supported in external layer 2 switches and server virtualization infrastructure. That is, external layer 2 switches have more advanced controls compared to server VEB implementations. Although server virtualization infrastructure is continually adding these controls, this gap is expected to remain. Some environments prefer the more advanced controls provided by external network switches. An example of such an environment is a multi-tier data center that has several types of applications, each with differing advanced network controls, running over the same layer-2 network. In this type of environment the network administrator often prefers the use of advanced access controls available in external switches.

Today's layer-2 networks do not provide a mechanism for automatically migrating switch access and traffic controls associated with an end-point device (e.g., a VM), when that device migrates from one switch to another. The migration may be physical, such as an Operating System image (application, middleware, Operating System and associated state) that is running on one physical system and is migrated to another system. The migration may be also be virtual, such as an Operating System image (OS image) that is running over a Hypervisor on one system and is migrated to run over a Hypervisor on another system.

Embodiments of the present invention provides a mechanism for automatically migrating port profiles resident in a switch and associated with an OS image to a port on a second switch, when that OS image migrates from one physical end-host system to another end-host system, which is attached to the second switch.

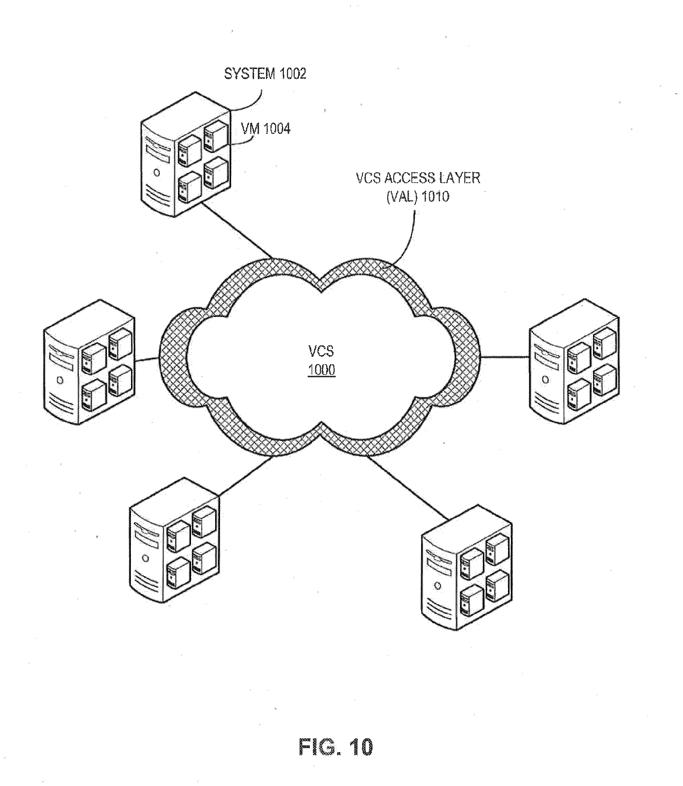

FIG. 10 illustrates a logical VCS access layer (VAL) which includes an automatic port profile manager, in accordance with one embodiment of the present invention. In this example, a VCS 1000 is coupled with a number of physical server systems, such as system 1002. Each physical server system runs a number of virtual machines (VMs, also called virtual servers). For example, system 1002 includes four VMs, one of which is VM 1004. A VM may be dedicated to a certain application (e.g., instant messaging services, directory services, data base applications, etc.) and may have its own requirement on the network. A VM running mission-critical applications may require a separate VLAN within VCS 1000 and may have more strict QoS requirement (such as guaranteed port bandwidth, low latency, and guaranteed packet delivery). A VM running non-critical applications may have much lower requirements.

The switches within VCS 100 which are coupled externally to the physical end-host systems form a logical VCS access layer (VAL) 1010. The automatic migration of port profiles (AMPP) is implemented in VAL 1010. During operation, various port profiles, which are often tailored to different requirements of the VMs, are created and distributed to all the member switches in VCS 1000. As described in detail below, when the packets generated by a VM are detected by an ingress member switch of VCS 1000, the VM's source MAC address is recognized and used to identify the corresponding port profile, which is then applied to the appropriate ingress switch port. When a VM moves from one physical server to another, the MAC-address detection mechanism can quickly identify the new physical switch port to which the VM is coupled to, and apply the same port profile to the new port.

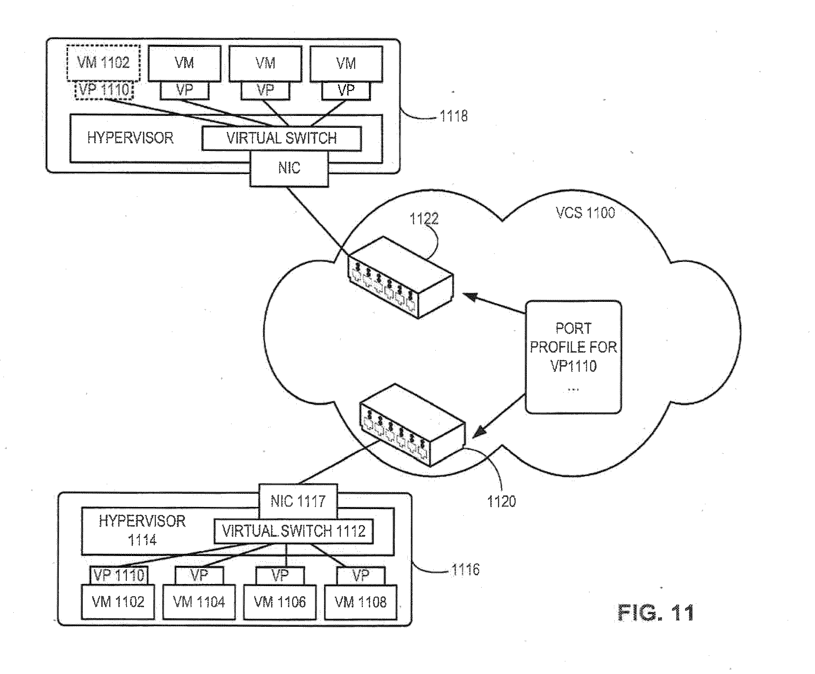

FIG. 11 illustrates an example of the operation of AMPP, in accordance with one embodiment of the present invention. In this example, a VCS 1100 includes two switches 1120 and 1122, which are coupled to two physical servers, 1116 and 1118, respectively. Physical server 1116 hosts four VMs, 1102, 1104, 1106, and 1008. Each VM has a virtual port (VP, or virtual network interface card, VNIC). For example, VM 1102 has a VP 1110. A respective VP is assigned a virtual MAC address. The four VPs are logically coupled to a virtual switch 1112 which is provided by a hypervisor 1114. Virtual switch 1112 is responsible for dispatching outgoing and incoming traffic through a physical NIC 1117. Note that an Ethernet frame generated by a respective VM has the virtual MAC of the corresponding VP as its source address. Logically, virtual switch 1112 functions as an aggregation point that provides a link to the ingress member switch in VCS 1100. Physical server 1118 has a similar architecture. During operation, a VM can migrate from one physical server to another (e.g., "VMotion" function provided by VMware). This migration can be event-driven or pre-scheduled. Such migration is often used to cope with changing dynamics in a number of parameters, such as server load, power consumption, resource utilization, etc.

During operation, one or more port profiles can be created to specify a number of requirements/restrictions/limitations that should be enforced at a VCS switch port corresponding to one or more VMs. For example, a port profile for VM 1102 (which can be identified by the virtual MAC address of VP 1110) can be created and distributed to every member switch of VCS 1100. When VM 1102 sends its first Ethernet frame to the network, switch 1120 would learn this source MAC address. Upon learning VP 1110's MAC address, switch 1120 then searches its port profile database and identifies the matching port profile. Subsequently, the identified port profile is applied to the port on switch 1120 which is coupled to system 1116. In addition, the same port profile is applied to the port where the matching MAC address is the destination MAC address of a frame. This way, the same network parameters are enforced at both ingress and egress ports of the VCS. Note that the port profile might include "soft" parameters. In other words, the requirements and limitations in the port profile may be specific to certain MAC addresses, and may not be "hard" limitations on the physical parameters of the switch port, since traffic from/to multiple VMs is handled by the same physical switch port.

In one embodiment, VCS 1100 provides a mechanism that distributes all the port profiles and the port-profile-to-MAC mapping information to all the member switches. The port profiles can be created using a command line interface (CLI) or other network management software. In addition, upon migration of a VM (such as a VMware VMotion), the target switch port in the VCS can automatically activate the correct port profile configuration.

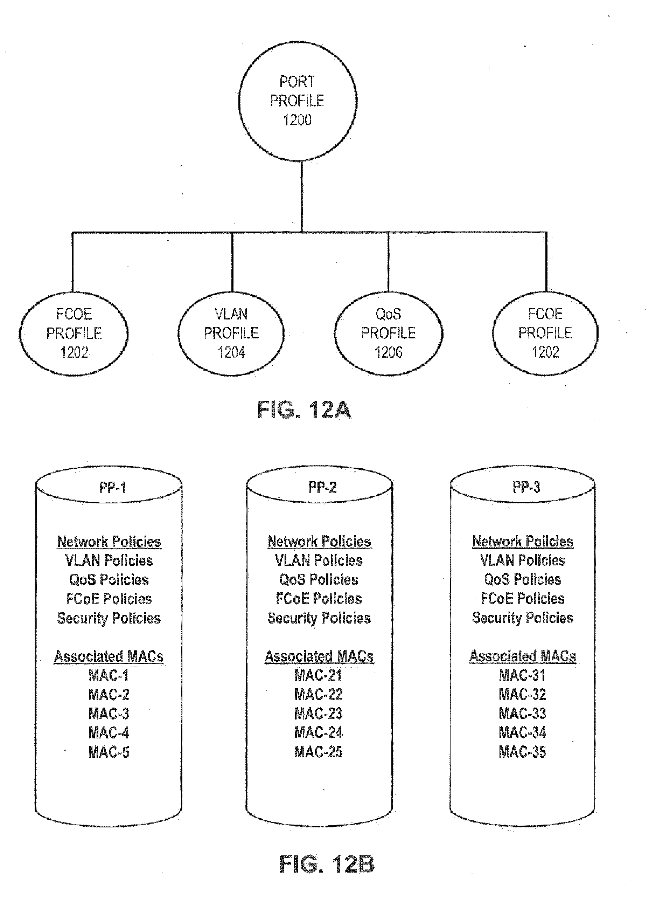

FIG. 12A illustrates exemplary port profile contents, in accordance with one embodiment of the present invention. As shown in FIG. 12A, a port profile can contain the entire configuration needed for a VM to gain access to a LAN or WAN, which can include: Fibre Channel over Ethernet (FCoE) configuration, VLAN configuration, QoS related configuration, and security related configuration (such as access control lists, ACLs). The list above is by no means complete or exhaustive. Furthermore, it is not necessary that a port profile contains every type of configuration information.

In one embodiment, a port profile can be capable of operating as a self contained configuration container. In other words, if a port profile is applied to a new switch without any additional configuration, the port profile should be sufficient to set the switch's global and local (interface level) configuration and allow the switch to start carrying traffic.

A VLAN configuration profile within a port profile can define:
- a VLAN membership which includes tagged VLANs and an untagged VLAN; and
- ingress/egress VLAN filtering rules based on the VLAN membership.

A QoS configuration profile within a port profile can define:
- mapping from an incoming frame's 802.1p priority to internal queue priority; (if the port is in QoS untrusted mode, all incoming frame's priorities would be mapped to the default best-effort priority)
- mapping from an incoming frame's priority to outgoing priority;
- scheduling profile, such as weighted Round-Robin or strict-priority based queuing;
- mapping of an incoming frame's priority to strict-priority based or weighted Round-Robin traffic classes;
- flow control mechanisms on a strict-priority based or weight Round-Robin traffic class; and
- limitations on multicast datarate.

An FCoE configuration profile within a port profile defines the attributes needed for the port to support FCoE, which can include:
- FCoE VLAN;
- FCMAP;
- FCoE Priority; and
- virtual Fabric ID.

A security configuration profile within a port profile defines the security rules needed for the server port. However, the security rules can be different at different ports, so some of the locally configured ACLs can be allowed to override conflicting rules from a port profile. A typical security profile can contain the following attributes:
- Enable 802.1x with EAP TLV extensions for VM mobility; and
- MAC based standard and extended ACLs.

In one embodiment, each port profile can have one or more MAC addresses associated with it. FIG. 12B illustrates three exemplary port profiles, in accordance with on embodiment of the present invention. In this example, port profile PP-1 is associated with 5 MAC addresses. These MAC address can be virtual MAC addresses assigned to different VMs. The port-profile-to-MAC mapping information is distributed throughout the VCS. A port profile can be activated on a server port in three ways: (1) when a hypervisor binds a MAC address to a port profile ID; (2) through regular MAC learning; and (3) through a manual configuration process via a management interface.

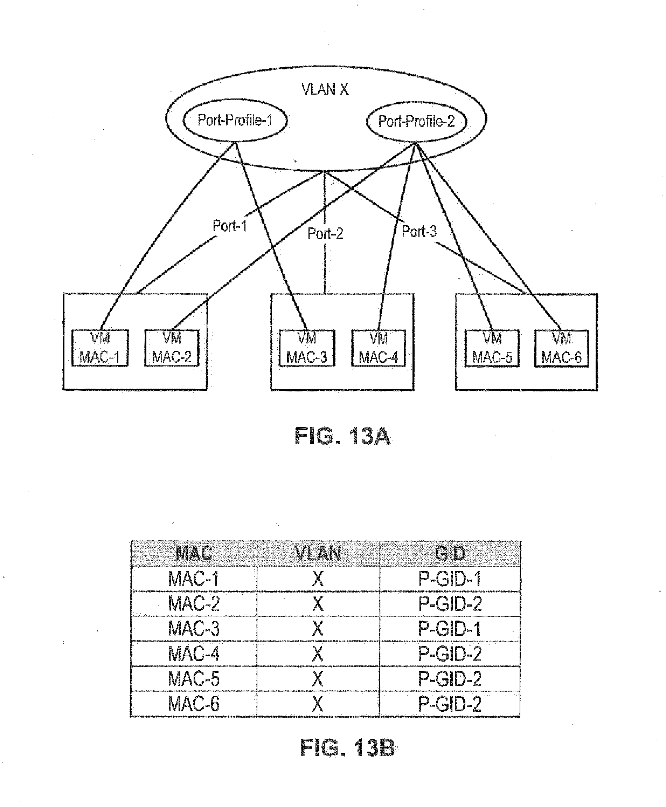

It is possible to group a set of VMs in the network by associating them with one port profile. This group can be used to dictate forwarding between the VMs. FIG. 13 illustrates how forwarding is achieved between VMs based on port profile membership, in accordance with one embodiment of the present invention. In this example, port profile 1 has two members: MAC-1 and MAC-3. Port profile 2 has four members: MAC-2, MAC-4, MAC-5, and MAC-6. All the VMs belong to the same VLAN X. Based on the tuple <MAC, VLAN ID>, a policy group ID (GID) can be determined. All the MAC addresses mapped to the same port profile should belong to the same policy group which dictates the forwarding boundary. This configuration allows enforcing different forwarding domains within a VLAN, as illustrated in FIG. 13B. The system then ensures that both the source MAC address and destination MAC address are part of the same port profile.

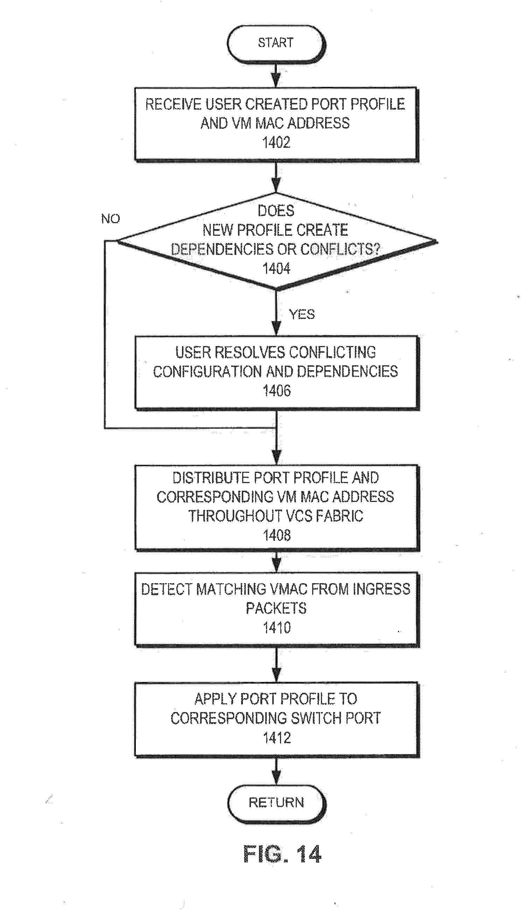

FIG. 14 presents a flowchart illustrating the process of creating and applying a port profile, in accordance with one embodiment of the present invention. During operation, the system receives a user created port profile with the corresponding VM's MAC address (operation 1402). This MAC address is then associated with the port profile and can be later used to identify the profile. The system then determines whether the new profile creates dependencies on other existing profiles or conflicts (operation 1404). If so, the system allows the user to resolve the conflicting configuration and/or dependencies (operation 1406).

Subsequently, the system distributes the port profile and the corresponding VM MAC address to every member switch throughout the VCS fabric (operation 1408). When a VM is initiated or migrated, the system then detects a matching virtual MAC address from the received ingress packets (operation 1410). Based on the learned MAC address, the system then activates the corresponding port profile on the switch port (operation 1412).

### Exemplary VCS Member Switch with AMPP

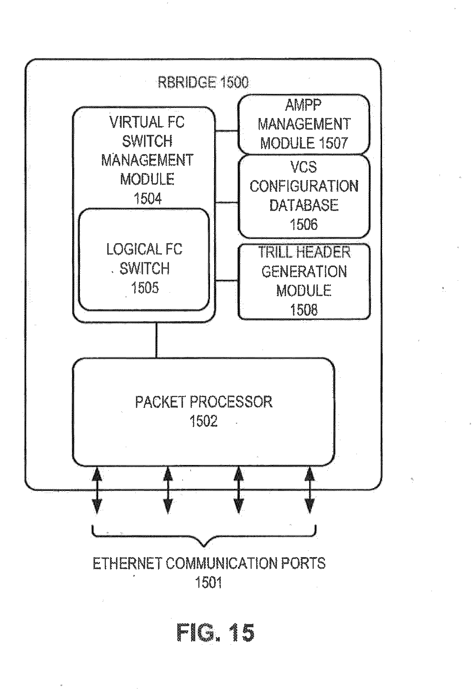

FIG. 15 illustrates an exemplary VCS member switch, in accordance with one embodiment of the present invention. In this example, the VCS member switch is a TRILL RBridge 1500 running special VCS software. RBridge 1500 includes a number of Ethernet communication ports 1501, which can transmit and receive Ethernet frames and/or TRILL encapsulated frames. Also included in RBridge 1500 is a packet processor 1502, a virtual FC switch management module 1504, a logical FC switch 1505, a VCS configuration database 1506, an AMPP management module 1507, and a TRILL header generation module 1508.

During operation, packet processor 1502 extracts the source and destination MAC addresses of incoming frames, and attaches proper Ethernet or TRILL headers to outgoing frames. Virtual FC switch management module 1504 maintains the state of logical FC switch. 1505, which is used to join other VCS switches using the FC switch fabric protocols. VCS configuration database 1506 maintains the configuration state of every switch within the VCS. TRILL header generation module 1508 is responsible for generating property TRILL headers for frames that are to be transmitted to other VCS member switches.

Upon learning a new MAC address from a VM, AMPP management module 1507 identifies the port profile corresponding to the learned MAC, and applies the identified port profile. This dynamic port profile application process can respond to VM migration within a very short period of time, thereby facilitating automatic port configuration in a virtual computing environment.

### Advanced Link Tracking

Today's server virtualization infrastructure (e.g. a Hypervisor, also called virtual machine monitor) typically provides one or more virtual switches (also called virtual Ethernet bridges, VEBs) within a physical server. Each virtual switch serves a number of virtual machines. When a number of such servers connect to a VCS, the number of communication sessions among the virtual machines can be quite large. In such a network environment, when a network link or port fails, the failure would typically disrupt the reachability to one or more virtual machines. This disruption can affect the communication sessions of some of the virtual machines. In conventional networks, such reachability disruption only triggers a topology change and/or MAC address learning update in the network, and the source virtual machines are not notified about these updates. Correspondingly, with conventional technologies, there is no way for a Hypervisor to re-configure the connectivity of the virtual machines absent of some signaling from the network via proprietary protocols.

Embodiments of the present invention facilitate advanced link tracking by monitoring any reachability disruption in the network and notifying the affected hypervisor. In response, the hypervisor can re-configure the connectivity of the virtual machines under its control to bypass the failed link or port. In one embodiment, this advanced link tracking function can be carried out in a logical VCS access layer.

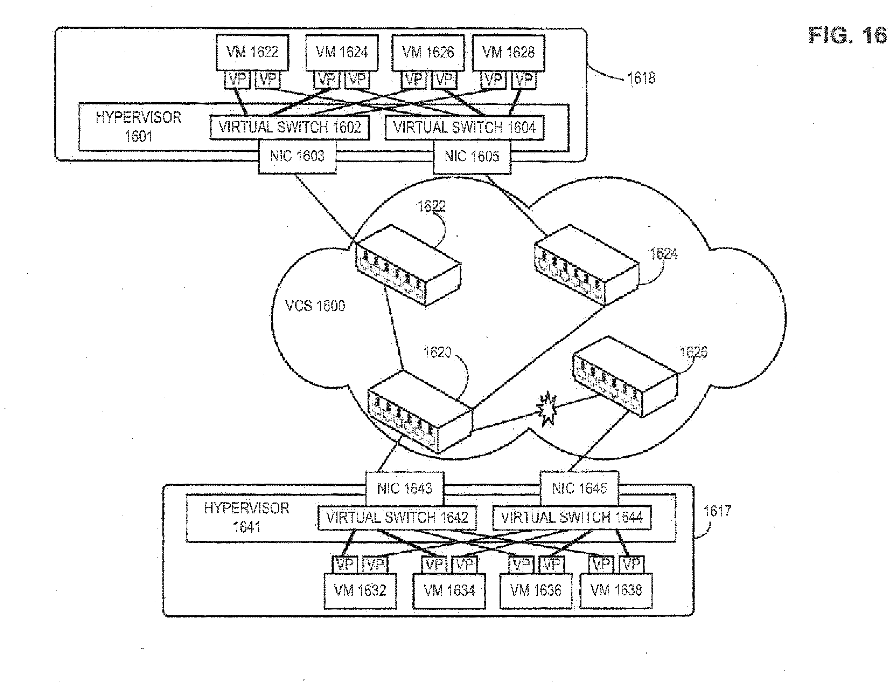

FIG. 16 illustrates an exemplary configuration of advanced link tracking in a VCS, in accordance with one embodiment of the present invention. In this example, a VCS 1600 includes four switches (which can be RBridges), 1620, 1622, 1624, and 1626. A physical server 1618 is coupled to both switches 1622 and 1624 via two network interface cards (NICs), 1603 and 1605, respectively. Physical server 1618 hosts four VMs, 1622, 1624, 1626, and 1628, which are managed by a hypervisor 1601. Hypervisor 1601 provides two virtual switches, 1602 and 1604. Each VM has two virtual ports (VPs), and is coupled to both virtual switches 1602 and 1604 via the VPs. In other words, each VM within physical server 1618 is dual-homed with virtual switches 1602 and 1604. This configuration provides redundancy to each VM, so that when one of the physical NICs (i.e., NIC 1603 or 1605) fails, hypervisor 1601 can instruct the VMs to use the other working NIC. During normal operation, for load-balancing purposes, VMs 1622 and 1624 are configured to communicate via virtual switch 1602, and VMs 1626 and 1628 are configured to communicate via virtual switch 1604.

Also coupled to VCS 1600 is physical servers 1617, which has a similar configuration as server 1618. Server 1617 includes four VMs, 1632, 1634, 1636, and 1638. These four VMs are each dual-homed with virtual switches 1642 and 1644, which are provided by hypervisor 1641. Virtual switch 1642 is coupled to VCS member switch 1620 via a NIC 1643, and virtual switch 1644 is coupled to VCS member switch 1626 via a NIC 1645. During normal operation, VMs 1632 and 1634 communicate with VCS 1600 via virtual switch 1642 and NIC 1643, and VMs 1636 and 1638 communicate with VCS 1600 via virtual switch 1644 and NIC 1645.

Assume that VMs 1622 and 1624 are in communication with VMs 1636 and 1638. Since VMs 1636 and 1638 are configured by hypervisor 1641 to use virtual switch 1644 and NIC 1645, the traffic between VMs 1622 and 1624 and VMs 1636 and 1638 is normally carried by VCS member switch 1626. Now, assume the link between switches 1620 and 1626 fails. As a result, VMs 1636 and 1638 can no longer be reached via NIC 1645. In embodiments of the present invention, this rechability update information is not only reflected in the VCS topology update (which is handled by the routing protocol within VCS 1600), but also communicated to hypervisor 1601 via NIC 1603. This update can allow hypervisor 1601 to quickly re-configure VMs 1622 and 1624, so that these two VMs use virtual switch 1604 and NIC 1605 to access VCS 1600. This way, the traffic from VMs 1622 and 1624 can still reach VMs 1636 and 1638 via switch 1624, switch 1620, NIC 1643, and virtual switch 1642. The new data path bypasses the failed link between switches 1620 and 1626. This re-configuration can take place shortly after the link failure is detected, thereby facilitating fast recovery at the source VMs.

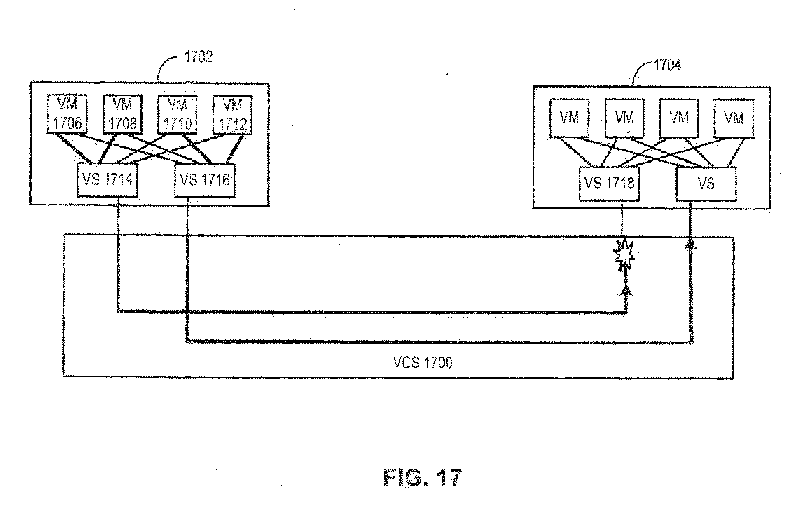

FIG. 17 illustrates an example where advanced link tracking allows virtual machines to re-route egress traffic when a link fails, in accordance with one embodiment of the present invention. In this example, two servers 1702 and 1704 are coupled to a VCS 1700. Server 1702 hosts four VMs, 1706, 1708, 1710, and 1712, all of which are dual-homed with virtual switches 1714 and 1716. During operation, VMs 1706 and 1708 access VCS 1700 via VS 1714, and VMs 1710 and 1712 access VCS 1700 via VS 1716. Server 1704 have a similar configuration as server 1702. Assume that throughout VCS 1700 there is only one path leading from VS 1714 to VS 1718 in server 1704. Assume further that during operation the egress port coupling to VS 1718 in server 1704 fails. As a result, VS 1718 is no longer reachable from VS 1714. The advanced link tracking mechanism can notify VS 1714 of the lost reachability to VS 1718. In one embodiment, VCS 1700 can communicate with a third entity which maintains the connectivity-pattern information among all the VMs (such as the vCenter by VMware) to obtain information on the affected VMs. In further embodiments, VCS 1700 can notify every external port of the lost reachability, and let the individual hypervisor to determine whether re-configuration of the VM-to-VS connectivity is necessary.

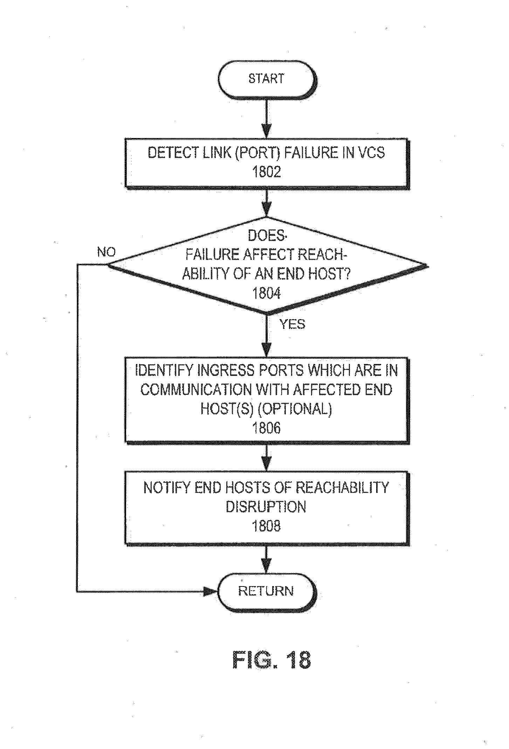

FIG. 18 presents a flowchart illustrating the process of advance link tracking, in accordance with one embodiment of the present invention. During operation, the system first detects a link (or port) failure in the VCS (operation 1802). The system then determines whether the failure affects reachability of an end host (operation 1804). If the failure does not affect reachability of any end host, it is assumed that VCS can recover from the failure after its topology converges and the routing protocol updates every switch's forwarding table. If the reachability of an end host is affected, the system then optionally identifies ingress port(s) which are in communication with the affected end host(s) (operation 1806). Subsequently, the system notifies the end hosts via the ingress ports of the reachability disruption (operation 1808).

### Exemplary VCS Member Switch with Advanced Link Tracking

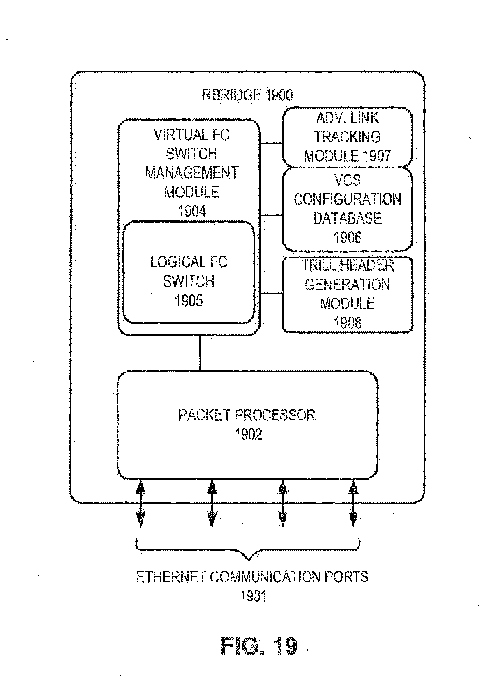

FIG. 19 illustrates an exemplary VCS member switch, in accordance with one embodiment of the present invention. In this example, the VCS member switch is a TRILL RBridge 1900 running special VCS software. RBridge 1900 includes a number of Ethernet communication ports 1901, which can be coupled to one or more servers hosting virtual machines and which can transmit and receive Ethernet frames and/or TRILL encapsulated frames. Also included in RBridge 1900 is a packet processor 1902, a virtual FC switch management module 1904, a logical FC switch 1905, a VCS configuration database 1906, an advanced link tracking module 1907, and a TRILL header generation module 1908.

During operation, packet processor 1902 extracts the source and destination MAC addresses of incoming frames, and attaches proper Ethernet or TRILL headers to outgoing frames. Virtual FC switch management module 1904 maintains the state of logical FC switch 1905, which is used to join other VCS switches using the FC switch fabric protocols. VCS configuration database 1906 maintains the configuration state of every switch within the VCS. TRILL header generation module 1908 is responsible for generating property TRILL headers for frames that are to be transmitted to other VCS member switches.

Upon learning about disrupted reachability in the VCS, advanced link tracking module 1907 identifies the port(s) which are affected by the disruption, and notifies the hypervisor of the disruption. This notification can allow the hypervisor to expedite the re-configuration of the affected VMs and minimize service disruption. Furthermore, advanced link tracking module 1907 also monitors the health of all the links corresponding to ports 1901. Upon detection of any link or port failure, advanced link tracking module 1907 can notify other switches in the VCS of the link state change and any reachability disruption.

### Virtual Port Grouping

Today's server virtualization infrastructure (e.g. a Hypervisor, also called virtual machine monitor) typically provides one or more virtual switches (also called virtual Ethernet bridges, VEBs) within a physical server. Each virtual switch serves a number of virtual machines. When a number of such servers connect to a VCS, the number of communication sessions among the virtual machines can be quite large. Often, different virtual machines belong to different customers, and different customers usually require dedicated and isolated network resources for security and quality of service purposes.

In one embodiment, each customer's virtual machines are placed in the same group based on the MAC address and VLAN tag of their associated virtual ports. The grouping information is replicated and stored at every VCS member switch. During operation, when a frame arrives at a VCS member switch, the member switch can enforce the grouping policy by looking up the group ID corresponding to the frame's source MAC address and VLAN tag. If the frame's destination MAC address combined with the VLAN tag belong to the same group, then the frame is forwarded to the proper next-hop switch. Otherwise, the frame is dropped. This configuration ensures that each customer's virtual machines only communicate within themselves, thereby creating virtual partitions within a VCS.

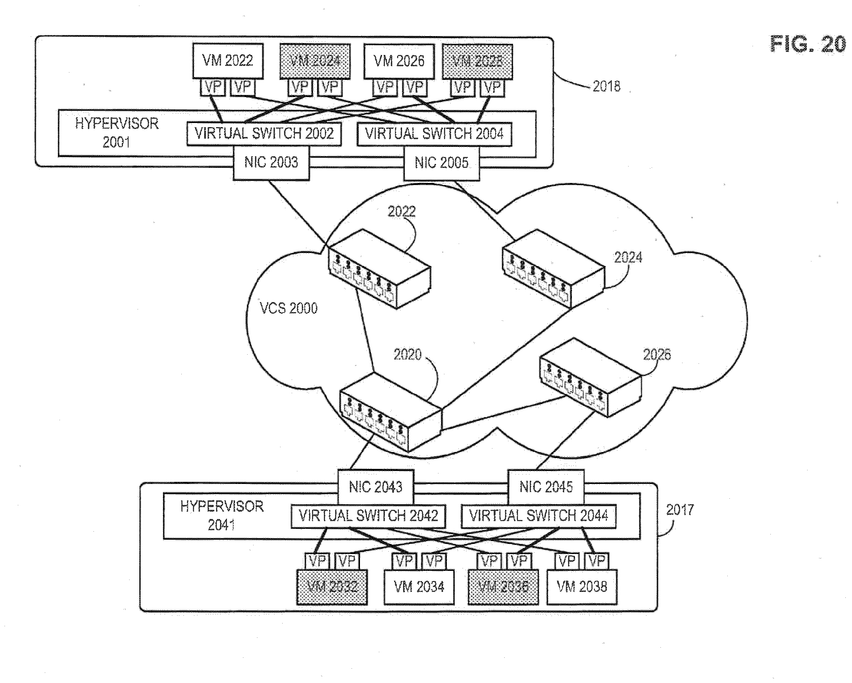

FIG. 20 illustrates an exemplary VCS network environment with virtual port grouping, in accordance with one embodiment of the present invention. In this example, a VCS 2000 includes four switches (which can be RBridges), 2020, 2022, 2024, and 2026. A physical server 2018 is coupled to both switches 2022 and 2024 via two network interface cards (NICs), 2003 and 2005, respectively. Physical server 2018 hosts four VMs, 2022, 2024, 2026, and 2028, which are managed by a hypervisor 2001. Hypervisor 2001 provides two virtual switches, 2002 and 2004. Each VM has two virtual ports (VPs), and is coupled to both virtual switches 2002 and 2004 via the VPs. In other words, each VM within physical server 2018 is dual-homed with virtual switches 2002 and 2004. This configuration provides redundancy to each VM, so that when one of the physical NICs (i.e., NIC 2003 or 2005) fails, hypervisor 2001 can instruct the VMs to use the other working NIC. During normal operation, for load-balancing purposes, VMs 2022 and 2024 are configured to communicate via virtual switch 2002, and VMs 2026 and 2028 are configured to communicate via virtual switch 2004.

Also coupled to VCS 2000 is physical servers 2017, which has a similar configuration as server 2018. Server 2017 includes four VMs, 2032, 2034, 2036, and 2038. These four VMs are each dual-homed with virtual switches 2042 and 2044, which are provided by hypervisor 2041. Virtual switch 2042 is coupled to VCS member switch 2020 via a NIC 2043, and virtual switch 2044 is coupled to VCS member switch 2026 via a NIC 2045. During normal operation, VMs 2032 and 2034 communicate with VCS 2000 via virtual switch 2042 and NIC 2043, and VMs 2036 and 2038 communicate with VCS 2000 via virtual switch 2044 and NIC 2045.

Assume that VMs 2024, 2028, 2032, and 2036 belong to the same customer (as indicated by the shading in each drawing element in FIG. 20), and that these VMs are restricted to communicate only within themselves. Typically, the customer would set a particular VLAN value to these VMs. However, the customer VLAN value might not work within VCS 2000, because the customer VLAN value might conflict with existing VLAN settings within VCS 2000. One way to solve this problem is to place the MAC addresses corresponding to the virtual ports of a particular customer's virtual machines, together with the customer's VLAN value, in a customer-specific group, and assign a unique group ID to this group. This grouping information can be a data structure that maps a {MAC, VLAN TAG} tuple to a group ID. This data structure is replicated and distributed to every member switch in VCS 2000.

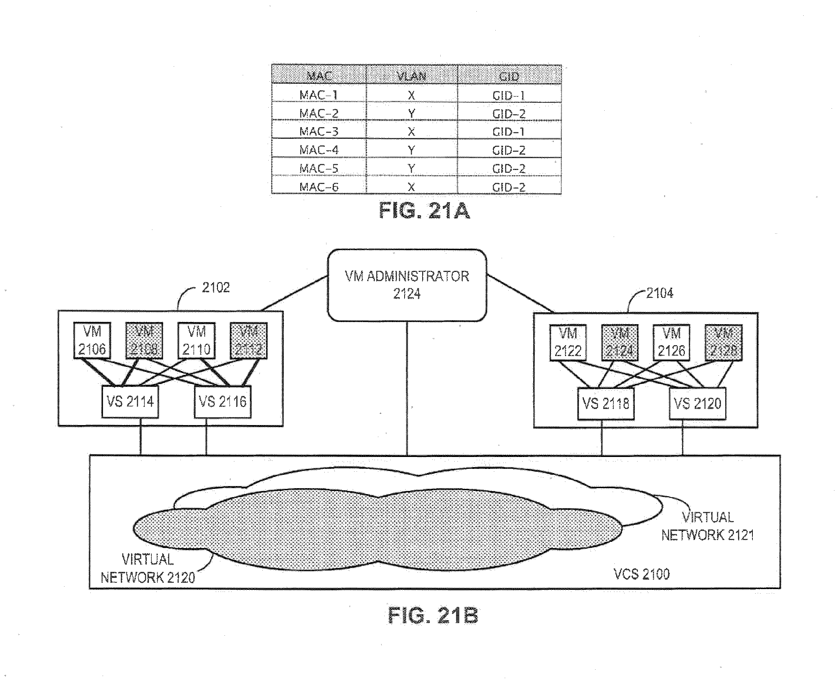

FIG. 21A illustrates an exemplary data structure for storing virtual port grouping information, in accordance with one embodiment of the present invention. In this example, each {MAC, VLAN TAG} tuple maps to a group ID, which is used to restrict forwarding of frames between different groups.

FIG. 21B illustrates logical virtual networks within a VCS as a result of virtual port grouping, in accordance with one embodiment of the present invention. In this example, two servers 2102 and 2104 are coupled to a VCS 2100. Server 2102 hosts four VMs, 2106, 2108, 2110, and 2112, all of which are dual-homed with virtual switches 2114 and 2116. Server 2104 hosts four VMs, 2122, 2124, 2126, and 2128, all of which are dual-homed with virtual switches 2118 and 2120. VMs 2108, 2112, 2124, and 2128 belong to the same customer and are expected to communicate only within themselves.

During operation, a VM administrator 2124 configures VMs 2108, 2112, 2124, and 2128 with the same VLAN tag corresponding to their common customer. Correspondingly, the MAC address of the virtual ports for these machines, together with the designated VLAN tag, are assigned with the same group ID. VMs 2106, 2110, 2122, and 2126 and their respective VLAN tags are assigned a different group ID. This grouping information is then communicated to VCS 2100 and stored at every member switch.

When the frames are processed and forwarded within VCS 2100, frames with one group ID are prohibited from being forwarded to a MAC address-VLAN combination that corresponds to a different group ID. Thus, effectively, the virtual port grouping creates two virtual networks 2120 and 2121 within VCS 2100.

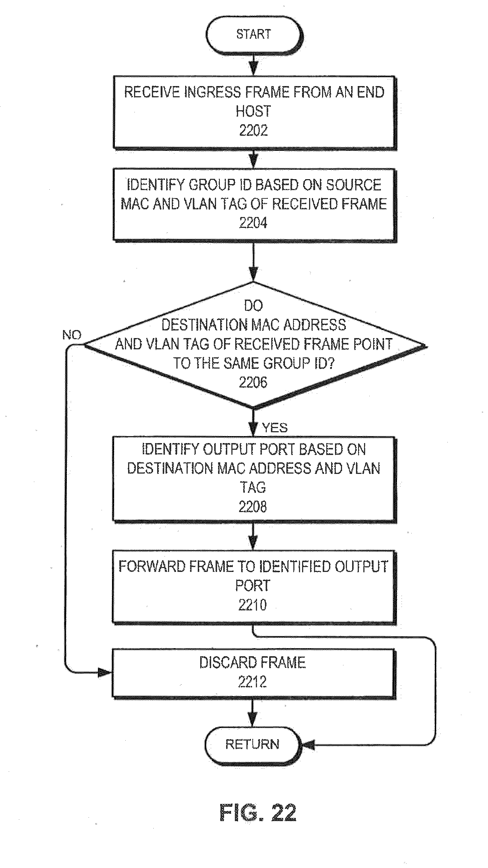

FIG. 22 presents a flowchart illustrating the process of enforcing virtual port grouping, in accordance with one embodiment of the present invention. During operation, a VCS member switch receives in ingress frame from an end host (operation 2202). The switch then identifies the group ID based on the source MAC address and VLAN tag of the received frame (operation 2204). In addition, the switch further determines whether the destination MAC address and VLAN tag of the received frame point to the same group ID (operation 2206). If so, the switch identifies the output port based on the destination MAC address and VLAN tag (operation 2208), and forwards the frame to the identified output port (operation 2210). Otherwise, the frame is discarded (operation 2212).

### Exemplary VCS Member Switch with Virtual Port Grouping

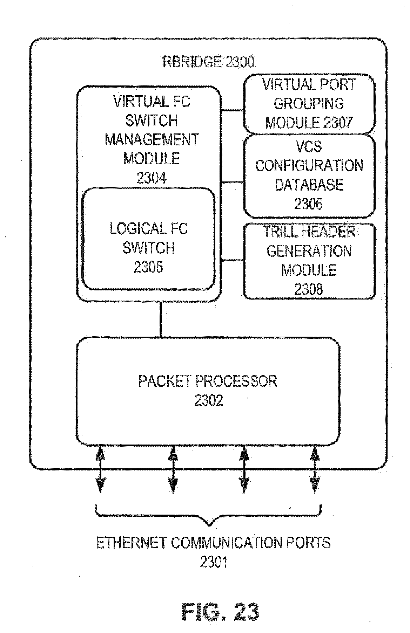

FIG. 23 illustrates an exemplary VCS member switch, in accordance with one embodiment of the present invention. In this example, the VCS member switch is a TRILL RBridge 2300 running special VCS software. RBridge 2300 includes a number of Ethernet communication ports 2301, which can be coupled to one or more servers hosting virtual machines and which can transmit and receive Ethernet frames and/or TRILL encapsulated frames. Also included in RBridge 2300 is a packet processor 2302, a virtual FC switch management module 2304, a logical FC switch 2305, a VCS configuration database 2306, virtual port grouping module 2307, and a TRILL header generation module 2308.

During operation, packet processor 2302 extracts the source and destination MAC addresses of incoming frames, and attaches proper Ethernet or TRILL headers to outgoing frames. Virtual FC switch management module 2304 maintains the state of logical FC switch 2305, which is used to join other VCS switches using the FC switch fabric protocols. VCS configuration database 2306 maintains the configuration state of every switch within the VCS. TRILL header generation module 2308 is responsible for generating property TRILL headers for frames that are to be transmitted to other VCS member switches. Virtual port grouping module 2307 is responsible for maintaining a copy of the grouping information and enforcing the grouping policies. As described in conjunction with FIG. 22, when a frame's {source MAC, VLAN TAG} and {destination MAC, VLAN TAG} do not map to the same group ID, the frame is prevented from being forwarded to any of the output ports. In one embodiment, virtual port grouping module 2307 can communicate with a VM administrator (such as the VMware Vcenter) to obtain the virtual port grouping information (e.g., the complete data structure illustrated in FIG. 21A).

### VCS Name Services

VCS allows an interconnected fabric of RBridges to function as a single logical switch. The VCS name services facilitate fast distribution of run-time network state changes, including newly learned MAC addresses (which is referred to as "Ethernet name service" or "Ethemet NS" in this disclosure) and multi-chassis trunk (MCT) port state updates (which is referred to as "MCT name service" or "MCT NS" in this disclosure). More details on MCT are provided in US Patent Application No. 12/725,249, (attorney docket number BRCD-112-0439US), entitled "REDUNDANT HOST CONNECTION IN A ROUTED NETWORK," by inventors Somesh Gupta, Anoop Ghanwani, Phanidhar Koganti, and Shunjia Yu, filed 16 March 2010.

The Ethernet NS provides the ability to distribute various information across the VCS. The MAC information learned at one member switch is distributed to all other member switches, which facilitates fast MAC moves (for example, during migration of virtual machines) and global MAC learning. In some embodiments, layer-2 multicast information, which can be a multicast MAC address with corresponding switch/port identifiers and VLAN tag, can be distributed to facilitate efficient VCS-wide multicast. Optionally, Ethernet NS provides a distribution mechanism and does not maintain a central storage of the MAC-related knowledge base. In other words, the Ethernet NS knowledge database is replicated and stored distributively among all the VCS member switches.

Each member switch maintains a database of all the MAC addresses learned throughout the VCS. This database can be used to minimize the amount of flooding (a default behavior of Ethernet switch when a frame's destination MAC address is not recognized). Ethernet NS also provides VCS-wide distribution of multicast MAC-to-RBridge/Port mapping information which can be obtained by Internet Group Management Protocol (IGMP) snooping. (Details about IGMP and IGMP snooping can be found at IETF RFC 3376 available at http://tools.ietf.org/html/rfc3376 and IETF RFC 4541 available at http://tools.ietf.org/html/rfc4541.) Ethernet NS distributes this information to all RBridges, thereby allowing the VCS to behave as a single switch. By tracking and forwarding IGMP join and leave information, the Ethernet NS can efficiently track the multicast MAC information and maintain an accurate layer-2 multicast group.

One of the requirements of presenting a VCS as a single switch is to support connection of trunked links from external hosts to different RBridges within the VCS fabric. Such trunking which involves connection to different RBridges is referred to as multi-chassis trunking (MCT). Conceptually, support within the VCS fabric for routing to a MCT destination is achieved by presenting each MCT group (i.e., each trunk) as a virtual RBridge. In some embodiments, the virtual RBridge is not assigned a domain ID and thus does not utilize FSPF for routing setup. Instead, the a primary RBridge hosting the MCT distributes the virtual RBridge ID and the corresponding link state updates to the VCS fabric. The primary RBridge is responsible for learning a new MAC via an MCT and distributing the new MAC information to the VCS.

When an RBridge joins the VCS it will request a dump of the local NS database from the remote RBridge. It will not respond to individual updates from the remote RBridge until the DB dump has been received. After the database is in sync between two RBridges, individual changes are detected locally and pushed remotely. If a local database receives domain unreachable it is responsible for removing all records for that remote domain and doing any local notification that this removal implies.

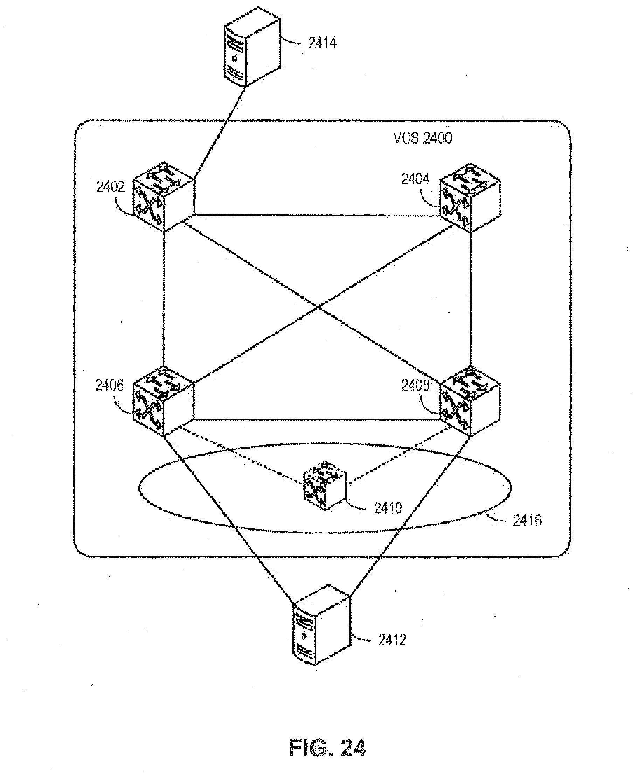

FIG. 24 illustrates an example of name service operation in a VCS, in accordance with one embodiment of the present invention. In this example, a VCS 2400 includes four member switches (Rbridges), 2402, 2404, 2406, and 2408. Assume that an end host 2414 is coupled to switch 2402 during operation. When end host 2414 sends its first Ethernet frame, switch 2402 would not recognize the source MAC address of this ingress frame. Upon receiving this ingress frame, switch 2402 then determines the port (or interface) on which the frame arrives and the frame's VLAG tag. Subsequently, switch 2402 assembles an Ethernet NS update frame which indicates the learned MAC address (which corresponds to end host 2414), its switch identifier (which in one embodiment is the RBridge ID of switch 2402), the port identifier, and the VLAG tag for the frame. In one embodiment, this frame is an FC registered state change notification (RSCN) encapsulated in a TRILL header. Note that switch 2402 can obtain the information of all other member switches in the VCS by looking up the global configuration database. Subsequently, switch 2402 can send the Ethernet NS update frame to switches 2404, 2408, and 2406, respectively. Upon receiving the Ethernet NS update frame, each member switch updates its own MAC database accordingly. In this way, when one of the member switches receives an Ethernet frame destined to end-host 2414, it can forward that frame to switch 2402 (instead of flooding the frame to all of its ports).

Also shown in the example in FIG. 24 is an MCT group 2416. MCT group 2416 is formed by an end host 2412 which is dual-homed with switches 2406 and 2408. Assume that switch 2406 is the primary RBridge in MCT group 2416. When end host 2412 and MCT group 2410 is first configured, switch 2406 assigns a virtual RBridge 2410 to MCT group 2410. In addition, switch 2406 notifies the rest of VCS 2400 about the MAC address of end host 2412. Note that the NS update associated the MAC address of end host 2412 indicates the identifier of virtual RBridge 2410 (instead of the identifier of either switch 2406 or switch 2408). In this way, the rest of VCS 2400 can associate end host 2412 with virtual RBridge 2410. When forwarding a frame destined to end host 2412, a member switch in VCS 2400 would forward the frame toward virtual RBridge 2410 (i.e., by setting RBridge 2410 as the destination RBridge in the TRILL header). Note that switch 2406 is also responsible for distributing the link state information with respect to the virtual connectivity between virtual RBridge 2410 and switches 2406 and 2408 (indicated by the dotted lines).

In case when one of the links (i.e., either the link between switch 2406 and end host 2412, or the link between switch 2408 and end host 2412) fails, as part of the MCT NS, in one embodiment, primary RBridge 2406 is responsible for updating the rest of the VCS 2400 that host 2412's MAC address is no longer associated with virtual RBidge 2410. Instead, the MAC address of host 2412 is now associated with the switch to which host 2412 remains connected. In a further embodiment, it can be the responsibility of the switch that remains connected to host 2412 to distribute the updated MAC address association to the rest of VCS 2400.

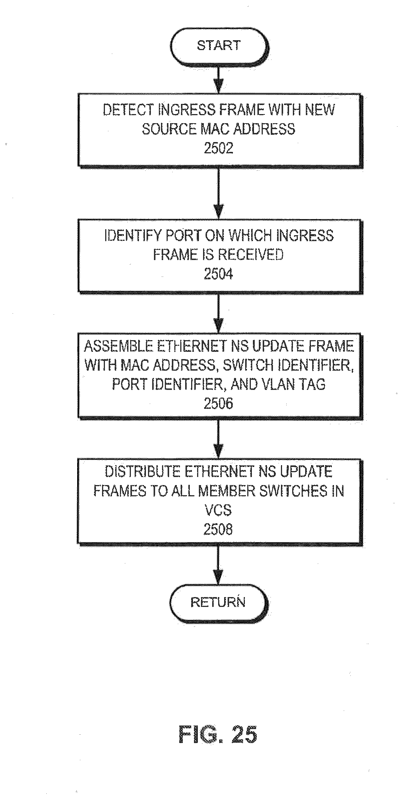

FIG. 25 presents a flowchart illustrating the process of distributing learned MAC information by the Ethernet name service in a VCS, in accordance with one embodiment of the present invention. During operation, a VCS member switch detects an ingress frame with a new source MAC address (operation 2502). The switch then identifies the port on which the ingress frame is received (operation 2504). Subsequently, the switch assembles an Ethernet NS update frame with the learned MAC address, the switch identifier, port identifier, and VLAN tag (operation 2506). The switch then distributes the Ethernet NS update frames to all member switches in the VCS (operation 2508).

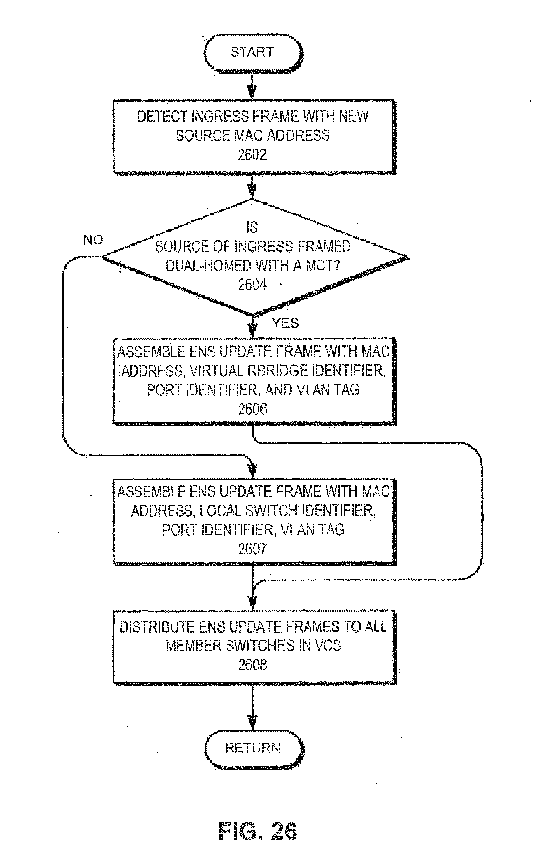

FIG. 26 presents a flowchart illustrating the process of distributing information of a learned MAC address via an MCT, in accordance with one embodiment of the present invention. During operation, assume that one of the switches in a MCT group detects an ingress frame with a new source MAC address (operation 2602). The switch then determines whether the end host which generates the frame is dual-homed with the MCT group (operation 2604). In one embodiment, the switch can make this determination by communicating with the other switch of the MCT group. In a further embodiment, the switch can inspect the link aggregation group (LAG) ID of the ingress frame to determine whether the end host is transmitting using a LAG. If the frame is an MCT frame, the switch then assembles an Ethernet NS update frame with the MAC address, the virtual RBridge identifier corresponding to the MCT, a port identifier, and the VLAG tag of the frame (operation 2606).

If the frame is determined to be from a regular end host (i.e., not a dual-homed host), the switch assembles an Ethernet NS updated frame with the MAC address, the local physical switch identifier (as opposed to the virtual RBridge ID), the identifier of the port on which the frame is received, and the frame's VLAN tag (operation 2607). The switch then distributes the Ethernet NS update frames to all the member switches in the VCS (operation 2608).

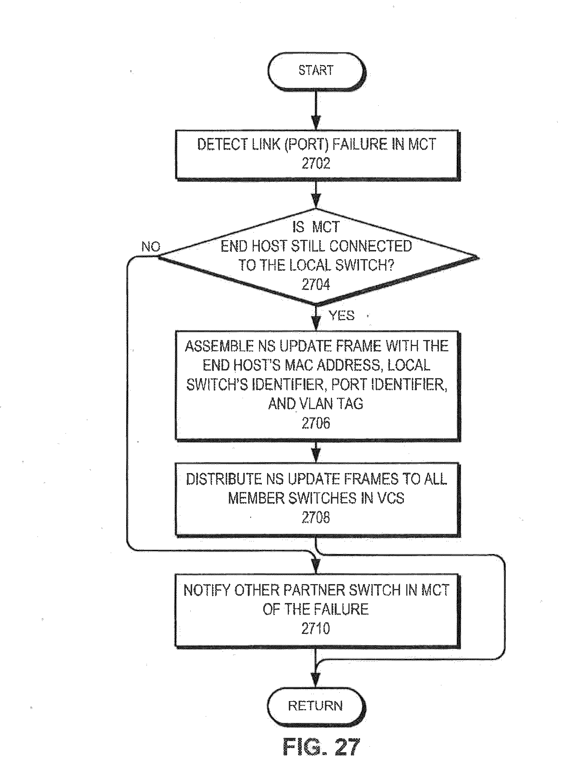

FIG. 27 presents a flowchart illustrating the process of updating the link state in an MCT group, in accordance with one embodiment of the present invention. During operation, assume one of the MCT partner switches detects a link or port failure which is part of the MCT group (operation 2702). Note that this failure can be detected locally (which means a port on the local switch or a link coupled to a local port has failed), or be detected remotely (which means that the failure occurs on the partner switch and the local switch is notified of the failure by the partner switch). The switch then determines whether the MCT end host is still connected to the local switch (operation 2704). If the end host is no longer connected to the local switch, the local switch optionally notifies the other partner switch in the MCT of the failure (operation 2710) and takes no further actions, assuming that the partner switch will assume responsibility of updating the link state (using, for example, the same procedure illustrated in FIG. 27).

If the MCT end host is still connected to the local switch, the switch then assembles an NS update frame with the end host's MAC address, the local switch's identifier (e.g., the physical RBridge ID of the local switch), the identifier of the port thought which the end host is connected, and the proper VLAN tag (operation 2706). The switch then distributes the NS update frames to all member switches in the VCS (operation 2708).

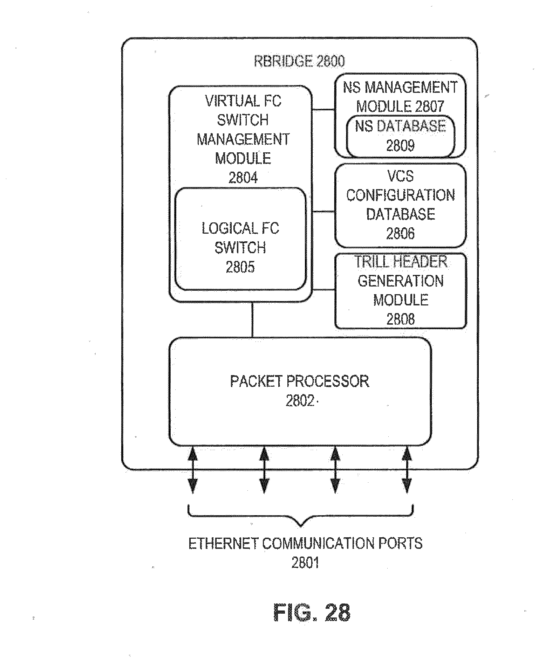

FIG. 28 illustrates an exemplary switch that facilitates formation of a virtual cluster switch with Ethernet and MCT name services, in accordance with an embodiment of the present invention. The VCS member switch is a TRILL RBridge 2800 running special VCS software. RBridge 2800 includes a number of Ethernet communication ports 2801, which can transmit and receive Ethernet frames and/or TRILL encapsulated frames. Also included in RBridge 2800 is a packet processor 2802, a virtual FC switch management module 2804, a logical FC switch 2805, a VCS configuration database 2806, a name services management module 2807, and a TRILL header generation module 2808.

During operation, packet processor 2802 extracts the source and destination MAC addresses of incoming frames, and attaches proper Ethernet or TRILL headers to outgoing frames. Virtual FC switch management module 2804 maintains the state of logical FC switch 2805, which is used to join other VCS switches using the FC switch fabric protocols. VCS configuration database 2806 maintains the configuration state of every switch within the VCS. TRILL header generation module 2808 is responsible for generating property TRILL headers for frames that are to be transmitted to other VCS member switches. Based on the extracted MAC addresses of incoming frames, NS management module 2807 distributes the NS update frames to the rest of the VCS. NS management module 2807 also maintains a copy of NS database 2809. NS database 2809 stores all the learned MAC address information from every member switch in the VCS.

### Equal Cost Multi-pathing

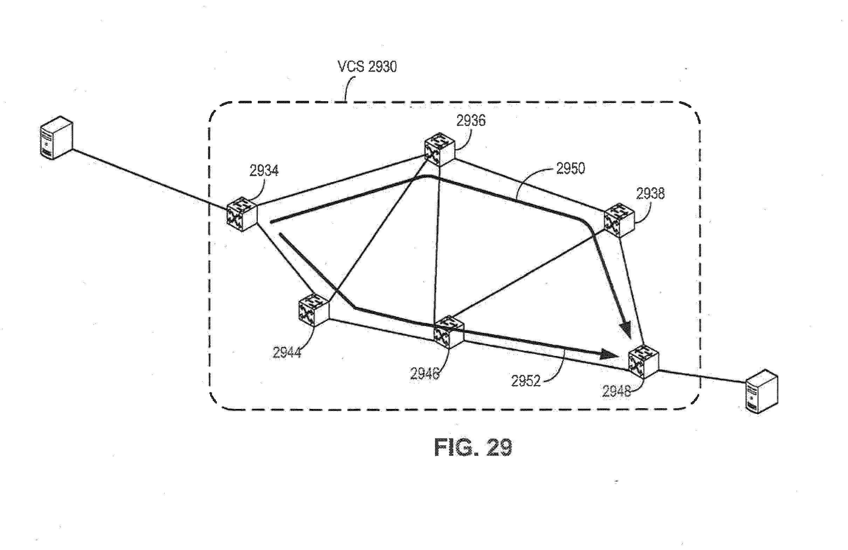

Because VCS uses the Fabric Shortest Path First (FSPF) routing protocol and the TRILL transport, embodiments of the present invention can facilitate equal-cost or nearly-equal-cost multi-pathing for load balancing purposes. FIG. 29 illustrates an exemplary equal cost multi-pathing configuration in a VCS, in accordance with one embodiment of the present invention. In this example, a VCS 2930 includes switches 2934, 2936, 2938, 2944, 2946, and 2948. Assume that a traffic flow enters VCS 2930 via ingress switch 2934 and exits VCS 2930 via egress switch 2948. Based on the hop distance, there are two equal-cost data paths, 2950 and 2952. In one embodiment, when determining the output interface, switch 2934's forwarding engine can return two possible output ports, corresponding to data paths 2950 and 2952, respectively. If load balancing is desired, traffic from switch 2934 to switch 2948 can be split between the two data paths.

In one embodiment, the traffic splitting can be based on any field in a frame header. For example, the traffic can be split based on VLAN tags. The traffic can also be split based on layer-4 port numbers or application types.

### Flow Control and Congestion Management

In some embodiments of the present invention, the VCS can achieve loss-less packet transport by implementing a number of flow control mechanisms. In one embodiment, the VCS member switches implement a priority-based flow control (PFC)-like mechanism to ensure a loss-less packet transport between neighboring switches. With priority-based flow control, traffic class is identified by the VLAN tag priority values. Priority-based flow control is intended to eliminate frame loss due to congestion. This is achieved by a mechanism similar to the IEEE 802.3x PAUSE, but operating on individual priorities. This mechanism enables support for higher layer protocols that are highly loss sensitive while not affecting the operation of traditional LAN protocols utilizing other priorities. Details of PFC can be found in the IEEE 802.1Qbb standard, available at http://www.ieee802.org/1/pages/802.1bb.html.

In further embodiments, the VCS member switch also employ enhanced transmission selection mechanisms, which support allocation of bandwidth amongst different traffic classes. When the offered load in a traffic class does not use its allocated bandwidth, enhanced transmission selection will allow other traffic classes to use the available bandwidth. The bandwidth-allocation priorities can coexist with strict priorities. The VCS can prioritize traffic to provide different service characteristics to traffic classes. It is possible to share bandwidth between priorities carrying bursty loads rather than servicing them with strict priority while allowing strict priority for time-sensitive and management traffic requiring minimum latency. Also, when traffic at a given priority level does not use its allocation, it is possible to allow other priorities to use that bandwidth. Details of ETS can be found in the IEEE 802.1 Qas standard, available at http://www.ieee802.org/1/pages/802.1az.html.

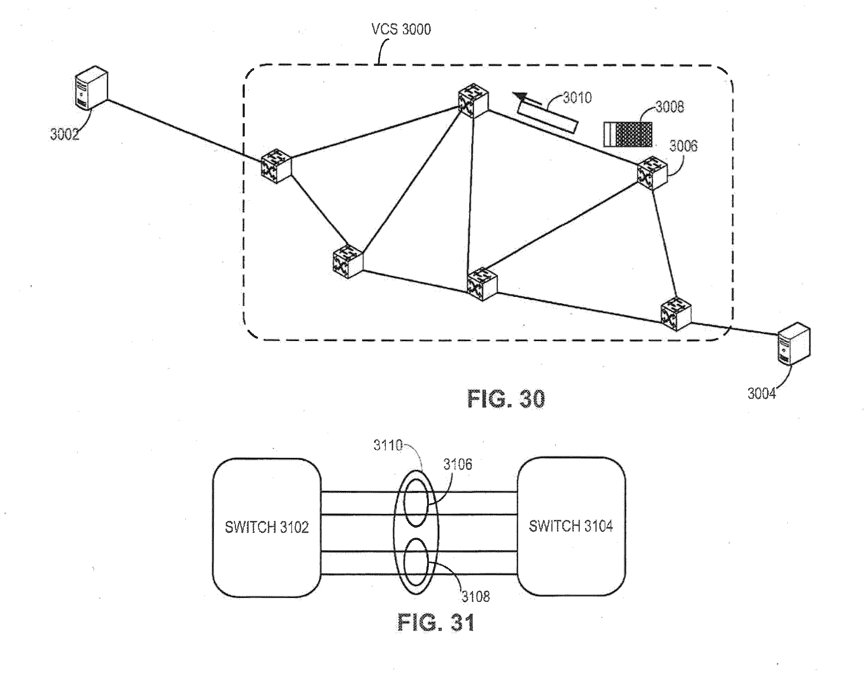

In some embodiments, the VCS member switches can also implement congestion notification mechanisms to facilitate source-oriented flow control. FIG. 30 illustrates an example of VCS congestion notification, in accordance with one embodiment of the present invention. In this example, assume a source host 3002 is transmitting frames to a destination host 3004 via a VCS 3000. Assume that congestion occurs at an intermediary switch 3006. As frames accumulate at switch 3006, its corresponding queue 3008 becomes full. A queue monitoring mechanism within switch 3006 is triggered when the content of queue 3008 passes a predetermined threshold. In response, switch 3006 can randomly select a frame in queue 3008, extract the source MAC address of the selected frame to construct a congestion notification frame, and send this notification frame to the source device corresponding to the extracted source MAC address (which is host 3002). Switch 3006 can perform the same action with multiple frames in queue 3008, so that if multiple sources are contributing to the congestion, these sources can all be notified.

### Hybrid Trunking

In one embodiment, the trunked links between two neighboring VCS member switches can be further trunked to form a hybrid trunk. This way, the amount of link state maintenance traffic between the two switches can be minimized. FIG. 31 illustrates an exemplary hybrid trunk in accordance with one embodiment of the present invention. In this example, two link trunk groups 3106 and 3108 are formed between VCS member switches 3102 and 3104. Assuming that trunk groups 3106 and 3108 can be identified by both switches without using a link aggregation group (LAG) ID, it is possible to form a LAG 3110 based on trunks 3106 and 3108. In this case, trunks 3106 and 3108 can be regarded as logical links. LAG 3110 can also include other individual, physical links (not shown).

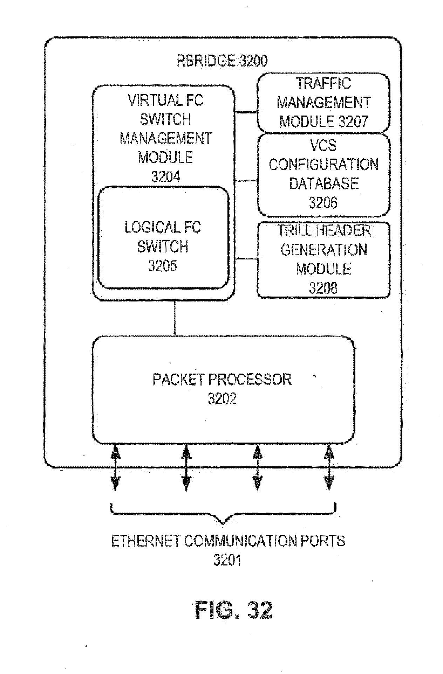

FIG. 32 illustrates an exemplary VCS member switch, in accordance with one embodiment of the present invention. In this example, the VCS member switch is a TRILL RBridge 3200 running special VCS software. RBridge 3200 includes a number of Ethernet communication ports 3201, which can transmit and receive Ethernet frames and/or TRILL encapsulated frames. Also included in RBridge 3200 is a packet processor 3202, a virtual FC switch management module 3204, a logical FC switch 3205, a VCS configuration database 3206, a traffic management module 3207, and a TRILL header generation module 3208.

During operation, packet processor 3202 extracts the source and destination MAC addresses of incoming frames, and attaches proper Ethernet or TRILL headers to outgoing frames. Virtual FC switch management module 3204 maintains the state of logical FC switch 3205, which is used to join other VCS switches using the FC switch fabric protocols. VCS configuration database 3206 maintains the configuration state of every switch within the VCS. TRILL header generation module 3208 is responsible for generating property TRILL headers for frames that are to be transmitted to other VCS member switches. Traffic management module 3207 facilitates the aforementioned traffic management functions, such as multi-pathing, flow control, congestion notification, and hybrid trunking.

### VCS with Converged Network Extension

One goal of the embodiments of the present invention is to extend a VCS and TRILL network across data centers and meet the scalability requirements needed by the deployments. A converged network extension (CNE) device can be implemented in a two-box solution, wherein one box is capable of L2/L3/FCoE switching and is part of the VCS, and the other facilitates the WAN tunneling to transport Ethernet and/or FC traffic over WAN. The CNE device can also be implemented in a one-box solution, wherein a single piece of network equipment combines the functions of L2/L3/FCoE switching and WAN tunneling.

As described above, VCS as a layer-2 switch uses TRILL as its inter-switch connectivity and delivers a notion of single logical layer-2 switch. This single logical layer-2 switch delivers a transparent LAN service. All the edge ports of VCS support standard protocols and features like Link Aggregation Control Protocol (LACP), Link Layer Discovery Protocol (LLDP), VLANs, MAC learning, etc. VCS achieves a distributed MAC address database using Ethernet Name Service (eNS) and attempts to avoid flooding as much as possible. VCS also provides various intelligent services, such as virtual link aggregation group (vLAG), advance port profile management (APPM), End-to-End FCoE, Edge-Loop-Detection, etc.

In embodiments of the present invention, for the purpose of cross-data-center communication, each data center is represented as a single logical RBridge. This logical RBridge can be assigned a virtual RBridge ID or use the RBridge ID of the CNE device that performs the WAN tunneling.

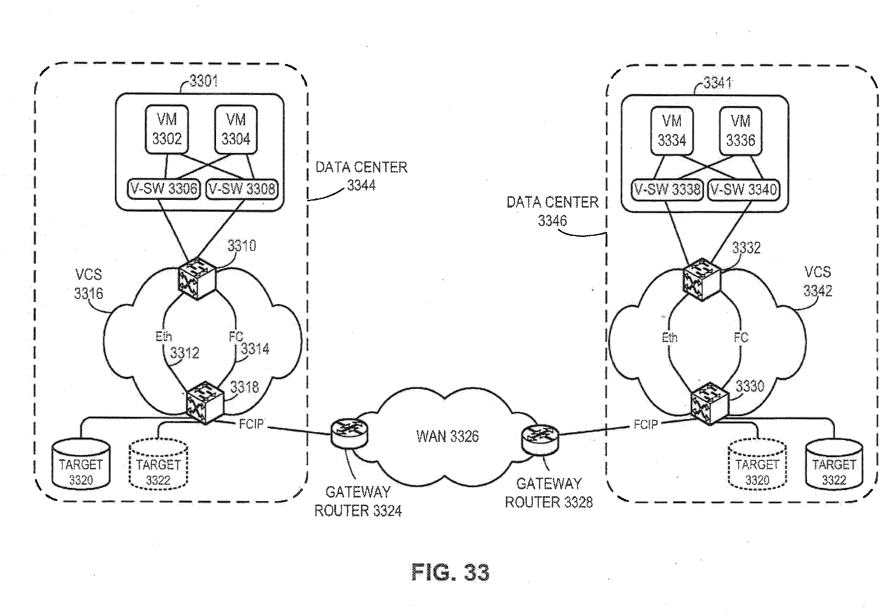

FIG. 33 illustrates an exemplary network architecture which includes CNE devices for facilitate cross-data-center communications, in accordance with one embodiment of the present invention. In this example, two data centers 3344 and 3346 are coupled to a WAN 3326 via gateway routers 3324 and 3328, respectively. Data center 3344 includes a VCS 3316, which couples to a number of hosts, such as host 3301, via its member switches, such as switch 3310. Host 3301 includes two VMs 3302 and 3304, which are coupled to virtual switches 3306 and 3308 in a dual-homing configuration. In one embodiment, virtual switches 3306 and 3308 reside on two network interface cards on host 3301. Virtual switches 3306 and 3308 are coupled to VCS member switch 3310. Also included in VCS 3316 is a CNE device 3318. CNE device 3318 is configured to receive both Ethernet (or TRILL) traffic from member switch 3310 via an Ethernet (or TRILL) link 3312, and FC traffic via FC link 3314. Also coupled to CNE device 3318 is a target storage device 3320, and a cloned target storage device 3322 (denoted by dotted lines). CNE device 3318 maintains an FCIP tunnel to data center 3346 across WAN 3326 via gateway routers 3324 and 3328.

Similarly, data center 3346 includes a VCS 3342, which in turn includes a member switch 3332. Member switch 3332 is coupled to a host 3341, which includes VMs 3334 and 3336, both of which are coupled to virtual switches 3338 and 3340. Also included in VCS 3342 is a CNE device 3330. CNE device is coupled to member switch 3332 via an Ethernet (TRILL) link and an FC link. CNE device 3330 is also coupled to target storage device 3322 and a clone of target storage device 3320.

During operation, assume that VM 3302 needs to move from host 3301 to host 3341. Note that this movement is previously not possible, because virtual machines are visible only within the same layer-2 network domain. Once the layer-2 network domain is terminated by a layer-3 device, such as gateway router 3324, all the identifying information for a particular virtual machine (which is carried in layer-2 headers) is lost. However, in embodiments of the present invention, because CNE device extends the layer-2 domain from VCS 3316 to VCS 3342, the movement of VM 3302 from data center 3344 to data center 3346 is now possible.

When forwarding TRILL frames from data center 3344 to data center 3346, CNE device 3318 modifies the egress TRILL frames' header so that the destination RBridge identifier is the RBridge identifier assigned to data center 3346. CNE device 3318 then uses the FCIP tunnel to deliver these TRILL frames to CNE device 3330, which in turn forwards these TRILL frames to their respective layer-2 destinations.

### TRILL Fabric Formation Across Data Centers

VCS uses FC control plane to automatically form a fabric and assign RBridge identifiers to each member switch. In one embodiment, the CNE architecture keeps the TRILL and SAN fabrics separate between data centers. From a TRILL point of view, each VCS (which corresponds to a respective data center) is represented as a single virtual RBrdige. In addition, the CNE device can be coupled to a VCS member switch with both a TRILL link and an FC link. The CNE device can join the VCS via a TRILL link. However, since the CNE devices keeps the TRILL VCS fabric and SAN (FC) fabric separate, the FC link between the CNE device and the member switch is configured for FC multi-fabric.

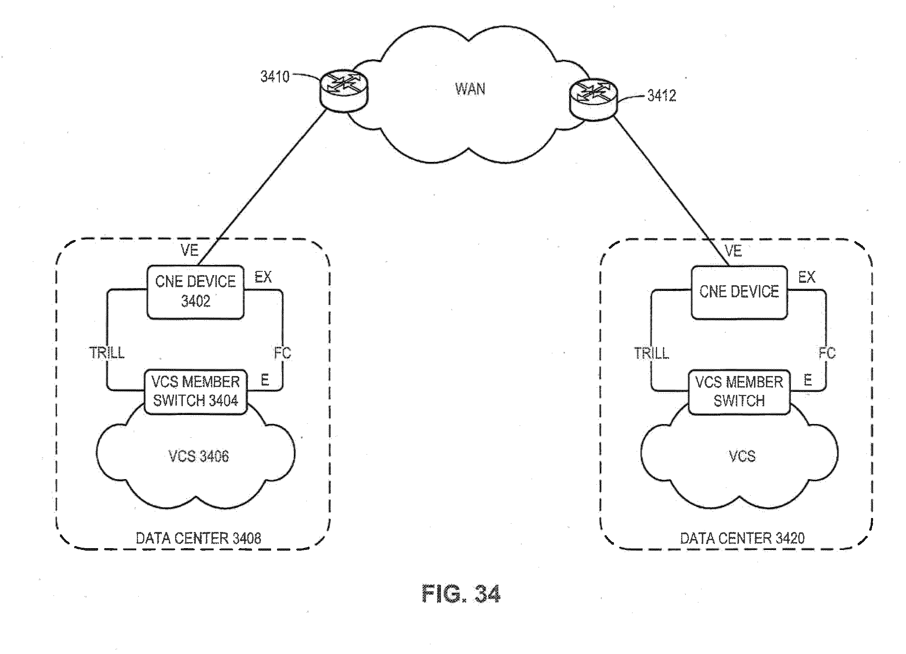

As illustrated in FIG. 34, a data center 3408 is coupled to a WAN via a gateway router 3410, and a data center 3420 is coupled to the WAN via a gateway router 3412. Data center 3408 includes a VCS 3406, which includes a member switch 3404. Also included in data center 3408 is a CNE device 3402. CNE device 3402 is coupled to VCS member switch 3404 via a TRILL link and an FC link. CNE device 3402 can join the VCS via the TRILL link. However, the FC link allows CNE device 3402 to maintain a separate FC fabric with VCS member switch 3404 to carry FC traffic. In one embodiment, the FC port on CNE device 3402 is an FC EX_port. The corresponding port on member switch 3404 is an FC E_port. The port on CNE device 3402 on the WAN side (coupling to gateway router 3410) is an FCIP VE_port. Data center 3420 has a similar configuration.

In one embodiment, each data center's VCS includes a node designated as the ROOT RBridge for multicast purposes. During the initial setup, the CNE devices in the VCSs exchange each VCS's ROOT RBridge identifier. In addition, the CNE devices also exchange each data center's RBridge identifier. Note that this RBridge identifier represents the entire data center. Information related to data-center RBridge identifiers is distributed as a static route to all the nodes in the local VCS.

### Forwarding BUM Traffic Across Data Centers

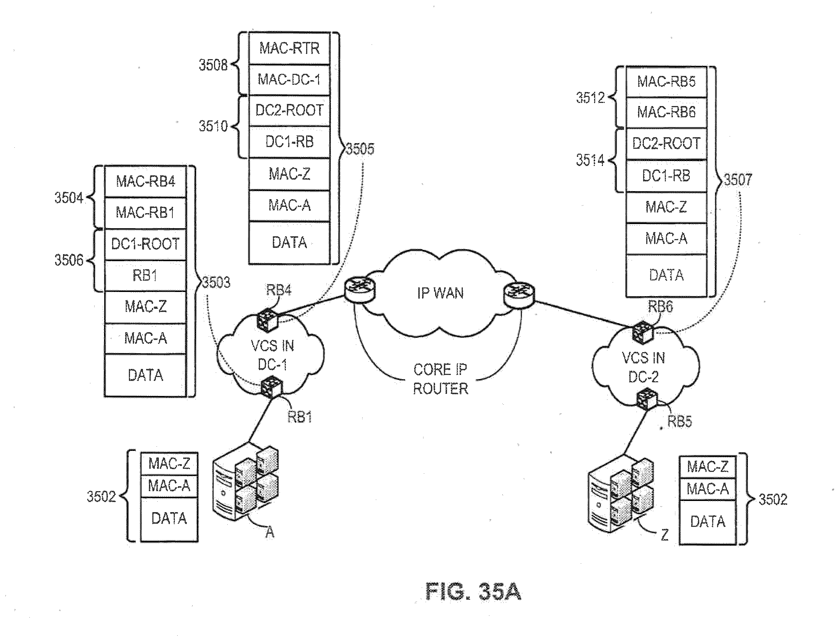

FIG. 35A presents a diagram illustrating how CNE devices handle broadcast, unknown unicast, and multicast (BUM) traffic across data centers, in accordance with one embodiment of the present invention. In this example, two data centers, DC-1 and DC-2, are coupled to an IP WAN via core IP routers. The CNE device in DC-1 has an RBridge identifier of RB4, and the CNE device in DC-2 has an RBridge identifier of RB6. Furthermore, in the VCS in DC-1, a member switch RB1 is coupled to host A. In the VCS in DC-2, a member switch RB5 is coupled to host Z.

Assume that host A needs to send multicast traffic to host Z, and that host A already has the knowledge of host Z's MAC address. During operation, host A assembles an Ethernet frame 3502, which has host Z's MAC address (denoted as MAC-Z) as its destination address (DA), and host A's MAC address (denoted as MAC-A) as its source address (SA). Based on frame 3502, member switch RB1 assembles a TRILL frame 3503, whose TRILL header 3506 includes the RBridge identifier of data center DC- 1's root RBridge (denoted as "DC1-ROOT") as the destination RBridge, and RB1 as the source RBridge. (That is, within DC-1, the multicast traffic is distributed on the local multicast tree.) The outer Ethernet header 3504 of frame 3503 has CNE device RB4's MAC address (denoted as MAC-RB4) as the DA, and member switch RB1's MAC address (denoted as MAC-RB1) as the SA.

When frame 3503 reaches CNE device RB4, it further modifies the frame's TRILL header to produce frame 3505. CNE device RB4 replaces the destination RBridge identifier in the TRILL header 3510 with data center DC-2's root RBridge identifier DC2-ROOT. The source RBridge identifier is changed to data center DC-1's virtual RBridge identifier, DC1-RB (which allows data center DC-2 to learn data center DC-1's RBridge identifier). Outer Ethernet header 3508 has the core router's MAC address (MAC-RTR) as its DA, and CNE device RB4's MAC address (MAC-DC-1) as its SA.

Frame 3505 is subsequently transported across the IP WAN in an FCIP tunnel and reaches CNE device RB6. Correspondingly, CNE device RB6 updates the header to produce frame 3507. Frame 3507's TRILL header 3514 remains the same as frame 3505. The outer Ethernet header 3512 now has member switch RB5's MAC address, MAC-RB5, as its DA, and CNE device RB6's MAC address, MAC-RB6, as its SA. Once frame 3507 reaches member switch RB5, the TRILL header is removed, and the inner Ethernet frame is delivered to host Z.

In various embodiments, a CNE device can be configured to allow or disallow unknown unicast, broadcast (e.g., ARP), or multicast (e.g., IGMP snooped) traffic to cross data center boundaries. By having these options, one can limit the amount of BUM traffic across data centers. Note that all TRILL encapsulated BUM traffic between data centers can be sent with the remote data center's root RBrdige identifier. This translation is done at the terminating point of the FCIP tunnel.

Additional mechanisms can be implemented to minimize BUM traffic across data centers. For instance, the TRILL ports between the CNE device and any VCS member switch can be configured to not participate in any of the VLAN MGIDs. In addition, the eNS on both VCSs can be configured to synchronize their learned MAC address database to minimize traffic with unknown MAC DA. (Note that in one embodiment, before the learned MAC address databases are synchronized in different VCSs, frames with unknown MAC DAs are flooded within the local data center only.)

To further minimize BUM traffic, broadcast traffic such as ARP traffic can be reduced by snooping ARP responses to build ARP databases on VCS member switches. The learned ARP databases are then exchanged and synchronized across different data centers using eNS. Proxy-based ARP is used to respond to all know ARP requests in a VCS. Furthermore, multicast traffic across data centers can be reduced by distributing the multicast group membership across data canters by sharing the IGMP snooping information via eNS.

### Forwarding Unicast Traffic Across Data Centers

The process of forwarding unicast traffic between data centers is described as follows. During the FCIP tunnel formation, the logical RBridge identifiers representing data centers are exchanged. When a TRILL frame arrives at the entry node of the FCIP tunnel, wherein the TRILL destination RBridge is set as the RBridge identifier of the remote data center, the source RBridge in the TRILL header is translated to the logical RBridge identifier assigned to the local data center. When the frame exits the FCIP tunnel, the destination RBridge field in the TRILL header is set as the local (i.e., the destination) data center's virtual RBridge identifier. The MAC DA and VLAN ID in the inner Ethernet header is then used to look up the corresponding destination RBridge (i.e., the RBridge identifier of the member switch to which the destination host is attached, and the destination RBridge field in the TRILL header is updated accordingly.

In the destination data center, based on an ingress frame, all the VCS member switches learn the mapping between the MAC SA (in the inner Ethernet header of the frame) and the TRILL source RBridge (which is the virtual RBridge identifier assigned to the source data center). This allows future egress frames destined to that MAC address to be sent to the right remote data center. Note that since the RBridge identifier assigned to a given data center does not correspond to a physical RBridge, in one embodiment, a static route is used to map a remote data-center RBridge identifier to the local CNE device.

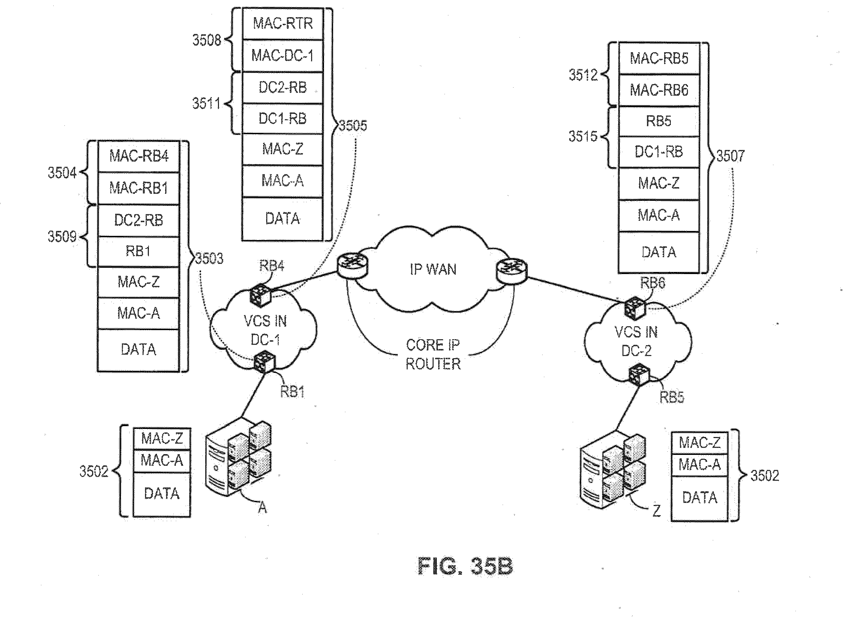

FIG. 35B presents a diagram illustrating how CNE devices handle unicast traffic across data centers, in accordance with one embodiment of the present invention. Assume that host A needs to send unicast traffic to host Z, and that host A already has the knowledge of host Z's MAC address. During operation, host A assembles an Ethernet frame 3502, which has host Z's MAC address (MAC-Z) as its DA, and host A's MAC address (MAC-A) as its SA. Based on frame 3502, member switch RB1 assembles a TRILL frame 3503, whose TRILL header 3509 includes the RBridge identifier of data center DC-2's virtual Rbridge (denoted as "DC2-RB") as the destination RBridge, and RB 1 as the source RBridge. The outer Ethernet header 3504 of frame 3503 has CNE device RB4's MAC address (MAC-RB4) as the DA, and member switch RB1's MAC address (MAC-RB1) as the SA.

When frame 3503 reaches CNE device RB4, it further modifies the frame's TRILL header to produce frame 3505. CNE device RB4 replaces the source RBridge identifier in the TRILL header 3511 with data center DC-1's virtual RBridge identifier DC1-RB (which allows data center DC-2 to learn data center DC-1's RBridge identifier). Outer Ethernet header 3508 has the core router's MAC address (MAC-RTR) as its DA, and CNE device RB4's MAC address (MAC-DC-1) as its SA.

Frame 3505 is subsequently transported across the IP WAN in an FCIP tunnel and reaches CNE device RB6. Correspondingly, CNE device RB6 updates the header to produce frame 3507. Frame 3507's TRILL header 3515 has an updated destination RBridge identifier, which is RB5, the VCS member switch in DC-2 that couples to host Z. The outer Ethernet header 3512 now has member switch RB5's MAC address, MAC-RB5, as its DA, and CNE device RB6's MAC address, MAC-RB6, as its SA. Once frame 3507 reaches member switch RB5, the TRILL header is removed, and the inner Ethernet frame is delivered to host Z.

### Learning MAC Addresses and Distributing Configuration Information Across Data Centers

Flooding across data centers of frames with unknown MAC Das is one way for the data centers to learn the MAC address in another data center. All unknown SAs are learned as MACs behind an RBridge and it is no exception for the CNE device. In one embodiment, eNS can be used to distribute learned MAC address database, which reduces the amount of flooding across data centers.

In order to optimize flushes, even though MAC addresses are learned behind RBridges, the actual VCS edge port associated with a MAC address is present in the eNS MAC updates. However, the edge port IDs might no longer be unique across data-centers. To resolve this problem, all eNS updates across data centers will qualify the MAC entry with the data-center's RBridge identifier. This configuration allows propagation of port flushes across data centers.

In the architecture described herein, VCSs in different data-centers do not join each other; hence the distributed configurations are kept separate. However, in order to allow virtual machines to move across data-centers, there will be some configuration data that needs to be synchronized across data-centers. In one embodiment, a special module (in either software or hardware) is created for CNE purposes. This module is configured to retrieve the configuration information needed to facilitate moving of virtual machines across data centers and it is synchronized between two or more VCSs.

In one embodiment, the learned MAC address databases are distributed across data centers. Also, edge port state change notifications (SCNs) are also distributed across data centers. When a physical RBridge is going down, the SCN is converted to multiple port SCNs on the inter-data-center FCIP link.

### Redundancy in CNE-enabled VCSs

In order to protect the inter-data-center connectivity, a VCS can form a vLAG between two or more CNE devices. In this model, the vLAG RBridge identifier is used as the data-center RBridge identifier. The FCIP control plane is configured to be aware of this arrangement and exchange the vLAG RBridge identifers in such cases.

FIG. 14 illustrates an example where two CNE devices are used to construct a vLAG, in accordance with an embodiment of the present invention. In this example, a VCS 1400 includes two CNE devices 1406 and 1408. Both CNE devices 1406 and 1408 forms a vLAG 1410 which is coupled to a core IP router. vLAG 1410 is assigned a virtual RBridge identifier, which is also used as the data-center RBridge identifier for VCS 1400. Furthermore, vLAG 1410 can facilitate both ingress and egress load balancing (e.g., based on equal-cost multi-pathing (ECMP)) for any member switch within VCS 1400.

### Rounting Among FC and Ethernet Inter-switch Links

Existing routing models assume every inter-switch link (ISL) can be a path to a reachable domain. However, if an FCIP-enabled VCS node joins the VCS via both FC and Ethernet ISLs, extra care needs to be taken to ensure that only FCoE storage traffic uses the FC links while the Ethernet ISLs are used for the LAN traffic. This can be achieved by allowing only FCoE VLAN traffic to use the FC links, while all non-FCoE traffic are allowed to use only the Ethernet ISLs.

### CNE Device Structure

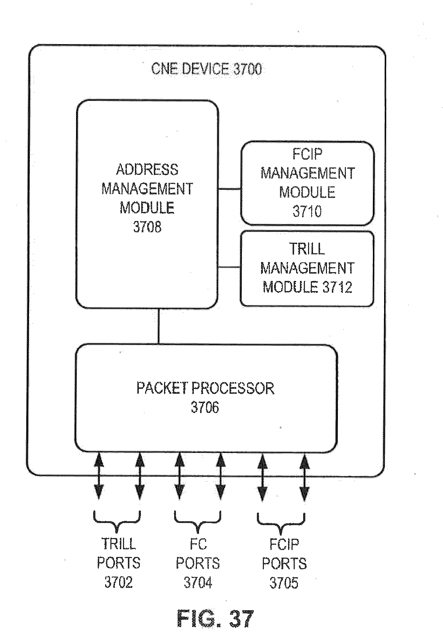

FIG. 37 illustrates an exemplary CNE device, in accordance with one embodiment of the present invention. In this example, a CNE device 3700 includes a number of TRILL ports 3702, FC ports 3704, and FCIP ports 3705. TRILL ports 3702 and FC ports 3704 are used to handle traffic within the local data center. FCIP ports 3705 are used to couple to WAN network equipment, such as IP routers. These ports are internally coupled to a packet processor 3706, which is responsible for updating a received frame's header(s).

Coupled to packet processor 3706 is an address management module 3708, which is responsible for maintaining the virtual data-center RBridge identifier, learning address information from remote data centers, and updating the source RBrdige field for outgoing frames to a remote data center. Also included in CNE device 3700 is an FCIP management module 3710, which maintains the FCIP tunnel and is responsible for exchanging configuration information via the FCIP tunnel, and a TRILL management module 3712, which manages the TRILL connection with the local VCS.

The methods and processes described herein can be embodied as code and/or data, which can be stored in a computer-readable non-transitory storage medium. When a computer system reads and executes the code and/or data stored on the computer-readable non-transitory storage medium, the computer system performs the methods and processes embodied as data structures and code and stored within the medium.

The methods and processes described herein can be executed by and/or included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The foregoing descriptions of embodiments of the present invention have been presented only for purposes of illustration and description. They are not intended to be exhaustive or to limit this disclosure. Accordingly, many modifications and variations will be apparent to practitioners skilled in the art.

The invention is defined by the appended independendt claims. The dependent claims refer to embodiments of the invention.

## Claims

1. A switching system, comprising:
a plurality of switches (101; 102, 103, 104, 105, 106, 107, 202, 204, 302, 304, 306, 308, 934, 936, 938, 944, 946, 948, 1500, 1620, 1622, 1624, 1626, 1620, 1626, 1900, 2300, 2402, 2404, 2406, 2408, 2800, 2934, 2948, 3200, 3310, 3332, 3404) adapted to transport packets using a first protocol;
a processor (1502, 1902, 2302, 2802, 3202, 3706) residing on each of the plurality of switches, wherein the processor is adapted to determine an output port (212, 526, 528) for a packet encapsulated based on the first protocol; and
a control module residing on at least one of the plurality of switches, wherein the control module is adapted to:
run a control plane on each of the plurality of switches, the control plane having automatic configuration capabilities based on a second protocol to allow the plurality of switches to be inter-connected; and
form a logical switch (502, 512, 521, 1505, 1905, 2305, 2805, 3205) using the plurality of switches, wherein the logical switch is assigned an identifier; and
cause one or more of the plurality of switches to join a virtual cluster switch (100, 120, 200, 300, 400, 520, 930, 1000, 1100, 1400, 1600, 1700, 2000, 2400, 2930, 3000, 3406) based on the formed logical switch; such that
the virtual cluster switch comprises one or more of the plurality of switches configured to be coupled in an arbitrary topology and to share a common address to operate as single logical switch; and
the virtual cluster switch appears externally as a single switch, and any port from the plurality of switches is considered one port on the switching system.

2. The switching system of claim 1, wherein a respective switch in the switching system receives an identifier associated with a logical switch (502, 512, 521, 1505, 1905, 2305, 2805, 3205) formed on the respective switch, and optionally wherein the logical switch is a logical Fibre Channel, FC, switch (512, 521, 1505, 1905, 2305, 2805, 3205) and the identifier is an FC switch domain ID.

3. The switching system of claim 1 or 2,
wherein the packets are transported between switches based on a TRILL protocol; and
wherein the respective switch is assigned a TRILL RBridge identifier that corresponds to the FC switch domain ID.

4. The switching system of any preceding claim, wherein a respective switch maintains a copy of configuration information of all the switches in the switching system.

5. The switching system of any preceding claim, wherein the switching system further comprises a MAC address learning service (2807) which maintains records of MAC addresses learned by a respective switch.

6. The switching system of any preceding claim, wherein the control module is further adapted to automatically configure the one or more switches within the virtual cluster switch based on the second protocol without requiring manual configuration.

7. The switching system of any preceding claim, wherein the first protocol is based on an Ethernet protocol.

8. The switching system of any preceding claim, wherein the first protocol is a Transparent Interconnection of Lots of Links, TRILL, protocol, and wherein the packet is encapsulated in a TRILL header (3506, 3509, 3510, 3511, 3514, 3515).

9. The switching system of any preceding claim, wherein the formed logical switch is a logical FC switch (512, 521, 1505, 1905, 2305, 2805, 3205).

10. The switching system of claim 9, wherein the identifier assigned to the logical switch is an FC switch domain ID.

11. The switching system of any preceding claim, wherein the control module is further adapted to maintain a copy of configuration information for the virtual cluster switch,
wherein the configuration information for the virtual cluster switch comprises a number of logical switch identifiers assigned to the plurality of switches in the virtual cluster switch.

12. The switching system of any preceding claim, further comprising a media access control, MAC, learning module (1907) adapted to:
learn a source MAC address of an ingress packet associated with a port (206); and
communicate the learned MAC address and the corresponding port information to a MAC address learning service.

13. The switching system of any preceding claim, wherein the processor is further adapted to query a MAC address learning service based on a received packet's destination MAC address prior to forwarding the received packet.

14. A method, comprising:
using a processor (1502, 1902, 2302, 2802, 3202, 3706) residing on each of a plurality of switches (101, 102, 103, 104, 105, 106, 107, 202, 204, 302, 304, 306, 308, 934, 936, 938, 944, 946, 948, 1500, 1620, 1622, 1624, 1626, 1620, 1626, 1900, 2300, 2402, 2404, 2406, 2408, 2800, 2934, 2948, 3200, 3310, 3332, 3404) to determine an output port (212, 526, 528) for a packet encapsulated based on a first protocol;
using a control module residing on at least one of the plurality of switches to:
run a control plane on each of the plurality of switches, the control plane having automatic configuration capabilities based on a second protocol to allow the plurality of switches to be inter-connected;
form a logical switch (502, 512, 521, 1505, 1905, 2305, 2805, 3205) using the plurality of switches, wherein the logical switch is assigned an identifier; and
cause one or more of the plurality of switches to join a virtual cluster switch (100, 120, 200, 300, 400, 520, 930, 1000, 1100, 1400, 1600, 1700, 2000, 2400, 2930, 3000, 3406) based on the formed logical switch; such that
the virtual cluster switch comprises the plurality of switches configured to be coupled in an arbitrary topology and to share a common address to operate as single logical switch; and
the virtual cluster switch appears externally to be one single switch, and any port from the plurality of switches is considered one port on the switching system.

15. The method of claim 14,
wherein the logical switch is a logical Fibre Channel, FC, switch (512, 521, 1505, 1905, 2305, 2805, 3205), and wherein the identifier assigned to the logical switch is an FC switch domain ID; and/or
wherein the method further comprises maintaining a copy of configuration information for the virtual cluster switch.

## Patentansprüche

1. Switch-System, umfassend:
eine Vielzahl von Switches (101, 102, 103, 104, 105, 106, 107, 202, 204, 302, 304, 306, 308, 934, 936, 938, 944, 946, 948, 1500, 1620, 1622, 1624, 1626, 1620, 1626, 1900, 2300, 2402, 2404, 2406, 2408, 2800, 2934, 2948, 3200, 3310, 3332, 3404) eingerichtet zum Transport von Paketen unter Verwendung eines ersten Protokolls;
einen Prozessor (1502, 1902, 2302, 2802, 3202, 3706), der sich auf jedem der Vielzahl von Switches befindet, wobei der Prozessor so eingerichtet ist, um einen Ausgangsport (212, 526, 528) für ein Paket, das auf der Grundlage des ersten Protokolls eingekapselt ist, zu bestimmen; und
ein Steuermodul, das sich auf mindestens einem der Vielzahl von Switches befindet, wobei das Steuermodul eingerichtet ist, um:
eine Steuerebene auf jedem der Vielzahl von Switches auszuführen, wobei die Steuerebene automatische Konfigurationsfähigkeiten auf der Grundlage eines zweiten Protokolls aufweist, um eine Verbindung der Vielzahl von Switches untereinander zu ermöglichen; und
und einen logischen Switch (502, 512, 521, 1505, 1905, 2305, 2805, 3205) unter Verwendung der Vielzahl von Switches zu bilden, wobei dem logischen Switch ein Identifikator zugewiesen ist; und
einen oder mehrere der Vielzahl von Switches zu veranlassen, einem virtuellen Cluster-Switch (100, 120, 200, 300, 400, 520, 930, 1000, 1100, 1400, 1600, 1700, 2000, 2400, 2930, 3000, 3406) auf der Grundlage des gebildeten logischen Switches beizutreten, so dass
der virtuelle Cluster-Switch einen oder mehrere der Vielzahl von Switches umfasst, die so konfiguriert sind, dass sie in einer beliebigen Topologie gekoppelt sind und eine gemeinsame Adresse teilen, um als einzelner logischer Switch zu arbeiten; und
der virtuelle Cluster-Switch extern als ein einzelner Switch erscheint und ein beliebiger Port aus der Vielzahl von Switches als ein Port auf dem Switch-System betrachtet wird.

2. Switch-System nach Anspruch 1, wobei ein entsprechender Switch in dem Switch-System einen einem logischen Switch (502, 512, 521, 1505, 1905, 2305, 2805, 3205), gebildet auf dem jeweiligen Switch, zugeordneten Identifikator empfängt und wobei der logische Switch gegebenenfalls ein logischer Fibre Channel-Switch (FC-Switch) (512, 521, 1505, 1905, 2305, 2805, 3205) ist und der Identifikator eine FC-Switch-Domänen-ID ist.

3. Switch-System nach Anspruch 1 oder 2,
wobei die Pakete zwischen Switches auf der Grundlage eines TRILL-Protokolls transportiert werden; und
wobei dem jeweiligen Switch ein TRILL-Bridge-Identifikator zugewiesen ist, der der FC-Switch-Domänen-ID entspricht.

4. Switch-System nach einem vorhergehenden Anspruch, wobei ein jeweiliger Switch eine Kopie von Konfigurationsinformationen aller Switches in dem Switch-System aufrechterhält.

5. Switch-System nach einem vorhergehenden Anspruch, wobei das Switch-System weiterhin einen MAC-Adressen-Lerndienst (2807) umfasst, der Aufzeichnungen von MAC-Adressen aufrechterhält, die von einem jeweiligen Switch gelernt wurden.

6. Switch-System nach einem vorhergehenden Anspruch, wobei das Steuermodul weiterhin so eingerichtet ist, dass es den einen oder die mehreren Switches innerhalb des virtuellen Cluster-Switches auf der Grundlage des zweiten Protokolls automatisch konfiguriert, ohne dass eine manuelle Konfiguration erforderlich ist.

7. Switch-System nach einem vorhergehenden Anspruch, wobei das erste Protokoll auf einem Ethernet-Protokoll basiert.

8. Switch-System nach einem vorhergehenden Anspruch, wobei das erste Protokoll ein Transparent Interconnection of Lots of Links-Protokoll, TRILL-Protokoll, ist und wobei das Paket in einem TRILL-Header (3506, 3509, 3510, 3511, 3514, 3515) eingekapselt ist.

9. Switch-System nach einem vorhergehenden Anspruch, wobei der gebildete logische Switch ein logischer FC-Switch (512, 521, 1505, 1905, 2305, 2805, 3205) ist.

10. Switch-System nach Anspruch 9, wobei der dem logischen Switch zugewiesene Identifikator eine FC-Switch-Domänen-ID ist.

11. Switch-System nach einem vorhergehenden Anspruch, wobei das Steuermodul weiterhin so ausgelegt ist, dass es eine Kopie von Konfigurationsinformationen für den virtuellen Cluster-Switch aufrechterhält, wobei die Konfigurationsinformationen für den virtuellen Cluster-Switch vorzugsweise eine Anzahl von logischen Switch-Identifikatoren umfassen, die der Vielzahl von Switches in dem virtuellen Cluster-Switch zugewiesen sind.

12. Switch-System nach einem vorhergehenden Anspruch, das weiterhin ein Media Access Control-MAC-Lernmodul (1907) umfasst, das dafür ausgelegt ist:
eine Quell-MAC-Adresse eines Eingangspakets zu lernen, die einem Port (206) zugeordnet ist; und die gelernte MAC-Adresse und die entsprechenden Portinformationen an einen MAC-Adressen-Lerndienst zu übermitteln.

13. Switch-System nach einem vorhergehenden Anspruch, wobei der Prozessor weiterhin dafür ausgelegt ist, einen MAC-Adressen-Lerndienst auf der Grundlage der Ziel-MAC-Adresse eines empfangenen Pakets abzufragen, bevor das empfangene Paket weitergeleitet wird.

14. Verfahren umfassend:
Verwendung eines Prozessors (1502, 1902, 2302, 2802, 3202, 3706), der sich auf jedem einer Vielzahl von Switches (101, 102, 103, 104, 105, 106, 107, 202, 204, 302, 304, 306, 308, 934, 936, 938, 944, 946, 948, 1500, 1620, 1622, 1624, 1626, 1620, 1626, 1900, 2300, 2402, 2404, 2406, 2408, 2800, 2934, 2948, 3200, 3310, 3332, 3404) befindet, um einen Ausgangsport (212, 526, 528) für ein Paket zu bestimmen, das auf der Grundlage eines ersten Protokolls eingekapselt ist;
Verwendung eines Steuermoduls, das sich auf mindestens einem der Vielzahl von Switches befindet, um:
eine Steuerebene auf jedem der Vielzahl von Switches auszuführen, wobei die Steuerebene automatische Konfigurationsfähigkeiten auf der Grundlage eines zweiten Protokolls aufweist, um eine Verbindung der Vielzahl von Switches untereinander zu ermöglichen;
einen logischen Switch (502, 512, 521, 1505, 1905, 2305, 2805, 3205) unter Verwendung der Vielzahl von Switches zu bilden, wobei dem logischen Switch ein Identifikator zugewiesen wird; und einen oder mehrere der Vielzahl von Switches zu veranlassen, einem virtuellen Cluster-Switch (100, 120, 200, 300, 400, 520, 930, 1000, 1100, 1400, 1600, 1700, 2000, 2400, 2930, 3000, 3406) auf der Grundlage des gebildeten logischen Switches beizutreten, so dass
der virtuelle Cluster-Switch die Vielzahl von Switches umfasst, die so konfiguriert sind, dass sie in einer beliebigen Topologie gekoppelt sind und eine gemeinsame Adresse teilen, um als ein einzelner logischer Switch zu arbeiten; und
der virtuelle Cluster-Switch extern als ein einzelner Switch erscheint, und einen beliebigen Port aus der Vielzahl von Switches als ein Port auf dem Switch-System betrachtet wird.

15. Verfahren nach Anspruch 14, wobei der logische Switch ein logischer Fibre Channel-Switch, FC-Switch, (512, 521, 1505, 1905, 2305, 2805, 3205) ist und wobei der dem logischen Switch zugewiesene Identifikator eine FC-Switch-Domänen-ID ist; und/oder
wobei das Verfahren weiterhin das Verwalten einer Kopie von Konfigurationsinformationen für den virtuellen Cluster-Switch umfasst.

## Revendications

1. Système de commutation, comprenant :
une pluralité de commutateurs (101, 102, 103, 104, 105, 106, 107, 202, 204, 302, 304, 306, 308, 934, 936, 938, 944, 946, 948, 1500, 1620, 1622, 1624, 1626, 1900, 2300, 2402, 2404, 2406, 2408, 2800, 2934, 2948, 3200, 3310, 3332, 3404) conçus pour transporter des paquets au moyen d'un premier protocole ;
un processeur (1502, 1902, 2302, 2802, 3202, 3706) résidant sur chacun de la pluralité de commutateurs, dans lequel le processeur est conçu pour déterminer un port de sortie (212, 526, 528) pour un paquet encapsulé sur la base du premier protocole ; et
un module de commande résidant sur au moins un commutateur de la pluralité de commutateurs, dans lequel le module de commande est conçu pour :
exécuter un plan de commande sur chacun de la pluralité de commutateurs, le plan de commande ayant des capacités de configuration automatique basées sur un second protocole pour permettre à la pluralité de commutateurs d'être interconnectés ; et
former un commutateur logique (502, 512, 521, 1505, 1905, 2305, 2805, 3205) à l'aide de la pluralité de commutateurs, dans lequel un identifiant est attribué au commutateur logique ; et
amener un ou plusieurs commutateurs de la pluralité de commutateurs à rejoindre un commutateur virtuel en grappe (100, 120, 200, 300, 400, 520, 930, 1000, 1100, 1400, 1600, 1700, 2000, 2400, 2930, 3000, 3406) sur la base du commutateur logique formé ; de telle sorte que
le commutateur virtuel en grappe comprend un ou plusieurs commutateurs de la pluralité de commutateurs conçus pour être couplés selon une topologie arbitraire et pour partager une adresse commune afin de fonctionner comme un commutateur logique unique ; et
le commutateur virtuel en grappe apparaît extérieurement comme étant un commutateur unique, et n'importe quel port de la pluralité de commutateurs est considéré comme un port sur le système de commutation.

2. Système de commutation selon la revendication 1, dans lequel un commutateur respectif dans le système de commutation reçoit un identifiant associé à un commutateur logique (502, 512, 521, 1505, 1905, 2305, 2805, 3205) formé sur le commutateur respectif, et éventuellement dans lequel le commutateur logique est un commutateur logique Fibre Channel, FC, (512, 521, 1505, 1905, 2305, 2805, 3205) et l'identifiant est un ID de domaine de commutateur FC.

3. Système de commutation selon la revendication 1 ou 2,
dans lequel les paquets sont transportés entre les commutateurs sur la base d'un protocole TRILL ; et
dans lequel le commutateur respectif se voit attribuer un identifiant TRILL RBridge qui correspond à l'ID de domaine de commutateur FC.

4. Système de commutation selon l'une quelconque des revendications précédentes, dans lequel un commutateur respectif conserve une copie des informations de configuration de tous les commutateurs dans le système de commutation.

5. Système de commutation selon l'une quelconque des revendications précédentes, dans lequel le système de commutation comprend en outre un service d'apprentissage d'adresse MAC (2807) qui conserve des enregistrements des adresses MAC apprises par un commutateur respectif.

6. Système de commutation selon l'une quelconque des revendications précédentes, dans lequel le module de commande est en outre conçu pour configurer automatiquement lesdits un ou plusieurs commutateurs dans le commutateur virtuel en grappe sur la base du second protocole sans nécessiter de configuration manuelle.

7. Système de commutation selon l'une quelconque des revendications précédentes, dans lequel le premier protocole est basé sur un protocole Ethernet.

8. Système de commutation selon l'une quelconque des revendications précédentes, dans lequel le premier protocole est un protocole d'interconnexion transparente d'un grand nombre de liens, TRILL, et dans lequel le paquet est encapsulé dans un en-tête TRILL (3506, 3509, 3510, 3511, 3514, 3515).

9. Système de commutation selon l'une quelconque des revendications précédentes, dans lequel le commutateur logique formé est un commutateur FC logique (512, 521, 1505, 1905, 2305, 2805, 3205).

10. Système de commutation selon la revendication 9, dans lequel l'identifiant attribué au commutateur logique est un ID de domaine de commutateur FC.

11. Système de commutation selon l'une quelconque des revendications précédentes, dans lequel le module de commande est en outre conçu pour conserver une copie des informations de configuration pour le commutateur virtuel en grappe, dans lequel les informations de configuration pour le commutateur virtuel en grappe comprennent un certain nombre d'identifiants de commutateurs logiques attribués à la pluralité de commutateurs dans le commutateur virtuel en grappe.

12. Système de commutation selon l'une quelconque des revendications précédentes, comprenant en outre un module d'apprentissage de contrôle d'accès au support, MAC, (1907) conçu pour :
apprendre une adresse MAC source d'un paquet d'entrée associé à un port (206) ; et
communiquer l'adresse MAC apprise et les informations de port correspondantes à un service d'apprentissage d'adresse MAC.

13. Système de commutation selon l'une quelconque des revendications précédentes, dans lequel le processeur est en outre conçu pour interroger un service d'apprentissage d'adresse MAC sur la base d'une adresse MAC de destination d'un paquet reçu avant de transmettre le paquet reçu.

14. Procédé, comprenant :
l'utilisation d'un processeur (1502, 1902, 2302, 2802, 3202, 3706) résidant sur chacun d'une pluralité de commutateurs (101, 102, 103, 104, 105, 106, 107, 202, 204, 302, 304, 306, 308, 934, 936, 938, 944, 946, 948, 1500, 1620, 1622, 1624, 1626, 1900, 2300, 2402, 2404, 2406, 2408, 2800, 2934, 2948, 3200, 3310, 3332, 3404) pour déterminer un port de sortie (212, 526, 528) pour un paquet encapsulé sur la base d'un premier protocole ;
l'utilisation d'un module de commande résidant sur au moins un commutateur de la pluralité de commutateurs pour :
exécuter un plan de contrôle sur chacun de la pluralité de commutateurs, le plan de contrôle ayant des capacités de configuration automatique basées sur un second protocole pour permettre à la pluralité de commutateurs d'être interconnectés ;
former un commutateur logique (502, 512, 521, 1505, 1905, 2305, 2805, 3205) à l'aide de la pluralité de commutateurs, dans lequel le commutateur logique se voit attribuer un identifiant ; et
amener un ou plusieurs commutateurs de la pluralité de commutateurs à rejoindre un commutateur virtuel en grappe (100, 120, 200, 300, 400, 520, 930, 1000, 1100, 1400, 1600, 1700, 2000, 2400, 2930, 3000, 3406) sur la base du commutateur logique formé ; de telle sorte que
le commutateur virtuel en grappe comprend la pluralité de commutateurs conçus pour être couplés selon une topologie arbitraire et pour partager une adresse commune afin de fonctionner comme un commutateur logique unique ; et
le commutateur virtuel en grappe apparaît extérieurement comme étant un commutateur unique, et n'importe quel port de la pluralité de commutateurs est considéré comme un port sur le système de commutation.

15. Procédé selon la revendication 14,
dans lequel le commutateur logique est un commutateur logique Fibre Channel, FC, (512, 521, 1505, 1905, 2305, 2805, 3205), et dans lequel l'identifiant attribué au commutateur logique est un ID de domaine de commutateur FC ; et/ou
dans lequel le procédé comprend en outre la conservation d'une copie des informations de configuration pour le commutateur virtuel en grappe.
